# EUROPEAN PATENT APPLICATION

(11) **EP 4 436 112 A1**
(43) Date of publication of application: **25.09.2024**
(21) Application number: 22909874.4
(22) Date of filing: 16.12.2022
(51) Int. Cl.: H04L 12/46, H04L 67/148

(54) **COMMUNICATION METHOD AND APPARATUS**

(30) Priority: 21.12.2021 CN 202111575052
(71) Applicant: HUAWEI TECHNOLOGIES CO., LTD., Shenzhen Guangdong 518129 (CN)
(72) Inventor: LI, Hancheng, Shenzhen, Guangdong 518129 (CN); WANG, Yan, Shenzhen, Guangdong 518129 (CN); HU, Weihua, Shenzhen, Guangdong 518129 (CN); XUE, Yifei, Shenzhen, Guangdong 518129 (CN)
(74) Representative: Pfenning, Meinig & Partner mbB
(86) International application number: PCT/CN2022/139486
(87) International publication number: WO 2023/116560

(57) **Abstract**

Embodiments of this application provide a communication method and apparatus. The method includes: A session management function network element determines a first user plane function network element based on first information of a service, association information between the first user plane function network element and a second user plane function network element, and information of services provided by the second user plane function network element, and sends second information of the service and a first identifier to the first user plane function network element, to indicate to send a packet of the service through a first flow. The first identifier is an identifier of the first flow, the first flow meets a requirement of the service, and the second user plane function network element supports the service. Therefore, the packet of the service may be transmitted through a flow that meets the requirement of the service. This improves a situation in which it is difficult to ensure that a packet forwarding path meets a requirement of a service of a terminal device, improves packet forwarding flexibility and efficiency, and implements dynamic scheduling that is based on a combination of a service capability of a network element and a network status.

## Description

This application claims priority to Chinese Patent Application No. 202111575052.8, filed with the China National Intellectual Property Administration on December 21, 2021 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

Currently, in a 5th generation (5th generation, 5G) communication network, packet forwarding between a terminal device, a device in a 5G virtual local area network (5G virtual local area network, 5GVN), and a device in a data network (data network, DN) can be implemented via the 5GVN.

However, in a 5GVN communication process, it is difficult for a packet forwarding path to meet a requirement of a service requested by the terminal device.

### SUMMARY

Embodiments of this application provide a communication method and apparatus, to meet a requirement of a service requested by a terminal device, and improve packet forwarding flexibility and efficiency.

According to a first aspect, a communication method is provided, and includes: A session management function network element determines a first user plane function network element based on first information of a service requested by a terminal device, association information between the first user plane function network element and a second user plane function network element, and information of services provided by the second user plane function network element, where the second user plane function network element supports the service. The session management function network element sends second information of the service and a first identifier to the first user plane function network element, to indicate to send a packet of the service through a first flow, where the first identifier is an identifier of the first flow, the first flow meets a requirement of the service, and the first flow is in a tunnel between the first user plane function network element and the second user plane function network element.

In the method, a user plane function network element is selected based on information about a service, and the information about the service and an identifier of a flow are sent to the user plane function network element, to indicate the user plane function network element to send a packet of the service through the flow. The flow is in a tunnel between the user plane function network element and another user plane function network element, and the flow meets a requirement of the service. Therefore, this improves a situation in which it is difficult to ensure that a packet forwarding path meets the requirement of the service of the terminal device, and improves packet forwarding efficiency and flexibility.

It should be understood that, that the second user plane function network element supports the service may be understood as that a device of the second user plane function network element includes a service instance that supports the service, or may be understood as that a data network device connected to the second user plane function network element supports the service (that is, the second user plane function network element is connected to the service instance that supports the service). This is not limited herein in this application.

It should be further understood that if there are services requested by at least two terminal devices, for each terminal device, a flow (where in this case, the flow is at a terminal device granularity) corresponding to the terminal device or a flow (where in this case, the flow is at a service granularity) corresponding to a service requested by the terminal device may be determined in a manner of the foregoing solution. The flow corresponding to the service requested by the terminal device may be a same flow (that is, when the flow is at the service granularity, the same flow may be used for the services of the at least two terminal devices in a reusing manner). For example, when requirements of services requested by two terminals are the same, the same flow may be reused. The flow corresponding to the service requested by the terminal device may alternatively be a different flow. For example, when the requirements of the services requested by the two terminals are different, different flows may be used. The flow corresponding to the terminal may be a different flow (that is, when the flow is at the terminal device granularity, one terminal device corresponds to one flow, and according to the method in this application, the flow corresponding to the terminal device needs to meet a requirement of a service requested by the terminal).

With reference to the first aspect, in some implementations of the first aspect, that a session management function network element determines a first user plane function network element based on first information of a service requested by a terminal device, association information between the first user plane function network element and a second user plane function network element, and information of services provided by the second user plane function network element includes: The session management function network element determines the second user plane function network element based on the first information of the service and the information of the services provided by the second user plane function network element, and determines the first user plane function network element based on the association information between the first user plane function network element and the second user plane function network element.

With reference to the first aspect, in some implementations of the first aspect, that the session management function network element determines the second user plane function network element based on the first information of the service and the information of the services provided by the second user plane function network element includes: The session management function network element determines, based on the first information of the service, information of services provided by at least one user plane function network element that can support the service. The session management function network element determines the second user plane function network element based on the information of the services provided by the at least one user plane function network element, where the at least one user plane function network element includes the second user plane network element.

With reference to the first aspect, in some implementations of the first aspect, the session management function network element determines the first flow based on association information between the service and one or more flows that meet the requirement of the service, where the one or more flows are in the tunnel between the first user plane function network element and the second user plane function network element, and the one or more flows include the first flow.

Specifically, the session management function network element may determine the one or more flows based on the association information between the service and the one or more flows, and then may determine, when the one or more flows meet the requirement of the service, the first flow (where for example, a flow with a long delay but a low cost may be selected as the first flow) through filtering based on a factor such as a cost requirement, a delay requirement, or a packet loss rate requirement for transmitting the packet of the service by using each flow.

With reference to the first aspect, in some implementations of the first aspect, the association information between the service and the one or more flows includes at least one of the following information: a correspondence between a SID of the service and the first identifier, a correspondence between a packet feature of the service and the first identifier, or a correspondence between a computing power slice identifier of the service and the first identifier.

The one or more flows may correspond to one user plane function network element, or may correspond to a plurality of user plane function network elements. This is not limited herein in this application.

With reference to the first aspect, in some implementations of the first aspect, information of services provided by any one of the at least one user plane function network element includes any one or more of the following: a service type or a SID supported by the any user plane function network element, a computing power slice identifier of the any user plane function network element, whether a service or a computing power slice of the any user plane function network element is available, a load status corresponding to the service or the computing power slice of the any user plane function network element, a delay of transmitting the packet of the service by the any user plane function network element, bandwidth of transmitting the packet of the service by the any user plane function network element, or a packet loss rate of transmitting the packet of the service by the any user plane function network element.

Correspondingly, it may be understood that the information of the services provided by the second user plane function network element may also include a service type (for example, a SID) of the first user plane function network element, a computing power slice identifier of the first user plane function network element, whether a service or a computing power slice of the first user plane function network element is available, a load status corresponding to the service or the computing power slice identifier of the first user plane function network element, a delay of transmitting the packet of the service by the first user plane function network element, bandwidth of transmitting the packet of the service by the first user plane function network element, or a packet loss rate of transmitting the packet of the service by the first user plane function network element.

For example, the session management network element may select a user plane function network element (that is, the second user plane function network element) with an optimal load status based on a load status that is of a service of each user plane function network element and that is represented in the information of the services provided by the at least one user plane function network element, or may select a user plane function network element (that is, the second user plane function network element) with a lowest delay based on a delay of transmitting the packet of the service by each user plane function network element.

According to the foregoing solution, the session management function network element may determine the first user plane function network element based on the first information of the service, the association information between the first user plane function network element and the second user plane function network element, and the information of the services provided by the second user plane function network element. Therefore, the session management function network element may select a user plane network element (for example, the second user plane function network element) based on the information about the service, so that the packet of the service may be transmitted based on a service capability or a service status of the network element, to implement dynamic scheduling that is based on a combination of the service capability of the network element and a network status.

With reference to the first aspect, in some implementations of the first aspect, the first information of the service and the second information of the service each include one or more of the SID of the service, the packet feature of the service, or the computing power slice identifier of the service.

With reference to the first aspect, in some implementations of the first aspect, the session management function network element receives indication information from the first user plane function network element or the second user plane function network element, where the indication information indicates that the second user plane function network element cannot meet the service.

Optionally, the indication information may further include information (for example, information such as an address and an identifier of a third user plane function network element) about a new user plane function network element, and the third user plane function network element supports the service. Alternatively, the indication information may further include information (for example, information such as an address and an identifier of a third service instance) about a new service instance, and the information about the new service instance indicates, when the first user plane network element forwards the packet, the first user plane network element to forward the packet to the new service instance.

With reference to the first aspect, in some implementations of the first aspect, the session management function network element sends the second information of the service and a second identifier to the first user plane function network element, to send the packet of the service through a second flow, where the second flow meets the requirement of the service, the second flow is in a tunnel between the first user plane function network element and the third user plane function network element, and the third user plane function network element supports the service.

According to the foregoing solution, after receiving the indication information indicating that the second user plane function network element cannot meet the service, the session management function network element may send the second information of the service and the second identifier to the first user plane function network element, to send the packet of the service through the second flow. The packet of the service is transmitted through the second flow, to prevent a user from perceiving a service exception, and improve stability of service transmission.

With reference to the first aspect, in some implementations of the first aspect, the session management function network element receives the first information of the service from the terminal device, a packet control function network element, or a unified data management function network element.

With reference to the first aspect, in some implementations of the first aspect, the first user plane function network element is an anchor user plane function network element of the terminal device.

According to a second aspect, a communication method is provided, and includes: A first user plane function network element determines, based on information about a service requested by a terminal device, a first flow that meets a requirement of the service, where the first flow is in a tunnel between the first user plane function network element and a second user plane function network element, and the second user plane function network element supports the service. The first user plane function network element sends a packet of the service to the second user plane function network element through the first flow.

According to the foregoing solution, the first user plane function network element may determine, based on the information about the service requested by the terminal device, the first flow that meets the requirement of the service. Therefore, this improves a situation in which it is difficult to ensure that a packet forwarding path meets the requirement of the service of the terminal device, and improves packet forwarding efficiency and flexibility.

With reference to the second aspect, in some implementations of the second aspect, that a first user plane function network element determines, based on information about a service requested by a terminal device, a first flow that meets a requirement of the service includes: The first user plane function network element determines the second user plane function network element based on the information about the service and information of services provided by the second user plane function network element. The first user plane function network element determines the first flow based on association information between the service and one or more flows, where the one or more flows are in the tunnel between the first user plane function network element and the second user plane function network element, and the one or more flows include the first flow.

With reference to the second aspect, in some implementations of the second aspect, that the first user plane function network element determines the second user plane function network element based on the information about the service and information of services provided by the second user plane function network element includes: The first user plane function network element determines, based on the information about the service, information of services provided by at least one user plane function network element that can support the service. The first user plane function network element determines the second user plane function network element based on the information of the services provided by the at least one user plane function network element, where the at least one user plane function network element includes the second user plane network element.

With reference to the second aspect, in some implementations of the second aspect, information of services provided by any one of the at least one user plane function network element includes any one or more of the following: a service type or a SID supported by the any user plane function network element, a computing power slice identifier of the any user plane function network element, whether a service or a computing power slice of the any user plane function network element is available, a load status corresponding to the service or the computing power slice of the any user plane function network element, a delay of transmitting the packet of the service by the any user plane function network element, bandwidth of transmitting the packet of the service by the any user plane function network element, or a packet loss rate of transmitting the packet of the service by the any user plane function network element.

For beneficial effects of the foregoing solution, refer to the related descriptions of the first aspect. For brevity, details are not described herein in this application.

With reference to the second aspect, in some implementations of the second aspect, the association information between the service and the one or more flows is configured in the first user plane function network element.

With reference to the second aspect, in some implementations of the second aspect, the first user plane function network element receives the association information between the service and the one or more flows from the terminal device or a session management function network element.

With reference to the second aspect, in some implementations of the second aspect, the packet of the service includes the association information between the service and the one or more flows.

With reference to the second aspect, in some implementations of the second aspect, the association information between the service and the one or more flows includes at least one of the following information: a correspondence between a SID of the service and a first identifier, a correspondence between a packet feature of the service and the first identifier, or a correspondence between a computing power slice identifier of the service and the first identifier.

With reference to the second aspect, in some implementations of the second aspect, the information about the service includes one or more of the SID of the service, the packet feature of the service, or the computing power slice identifier of the service.

With reference to the second aspect, in some implementations of the second aspect, the first user plane function network element receives indication information from the second user plane function network element, where the indication information indicates that the second user plane function network element cannot meet the service.

For beneficial effects of the foregoing solution, refer to the related descriptions of the first aspect. For brevity, details are not described herein in this application.

With reference to the second aspect, in some implementations of the second aspect, the first user plane function network element determines a second flow that meets the requirement of the service, where the second flow is in a tunnel between the first user plane function network element and a third user plane function network element, and the third user plane function network element supports the service.

With reference to the second aspect, in some implementations of the second aspect, the first user plane function network element is an anchor user plane function network element of the terminal device.

For beneficial effects of the foregoing solution, refer to the related descriptions of the first aspect. For brevity, details are not described herein in this application.

According to a third aspect, a communication method is provided, and includes: A second user plane function network element receives an uplink packet of a service through a first flow that meets a requirement of the service requested by a terminal device, where the uplink packet includes information about the uplink packet. The second user plane function network element stores a correspondence between the uplink packet of the service and the first flow. The second user plane function network element receives a downlink packet of the service from a service instance, where the downlink packet of the service includes information about the downlink packet of the service. The second user plane function network element determines, based on the information about the downlink packet of the service and the correspondence between the uplink packet of the service and the first flow, a second flow associated with the first flow. The second user plane function network element sends the downlink packet of the service through the second flow.

According to the foregoing solution, the second user plane function network element may store the correspondence between the uplink packet of the service and the first flow, so that when subsequently transmitting the downlink packet of the service, the second user plane function network element can select the second flow (where the second flow may alternatively be a same flow as the first flow) associated with the first flow to transmit the downlink packet of the service.

With reference to the third aspect, in some implementations of the third aspect, the information about the uplink packet of the service includes one or more of a SID of the uplink packet of the service, a packet feature of the uplink packet of the service, or a computing power slice identifier of the uplink packet of the service.

With reference to the third aspect, in some implementations of the third aspect, the information about the downlink packet of the service includes one or more of a SID of the downlink packet of the service, a packet feature of the downlink packet of the service, or a computing power slice identifier of the downlink packet of the service.

With reference to the third aspect, in some implementations of the third aspect, the correspondence between the uplink packet of the service and the first flow is at least one of the following: a correspondence between the SID of the uplink packet of the service and a first identifier, a correspondence between the packet feature of the uplink packet of the service and the first identifier, or a correspondence between the computing power slice identifier of the uplink packet of the service and the first identifier, where the first identifier is an identifier of the first flow.

With reference to the third aspect, in some implementations of the third aspect, the second user plane function network element sends indication information to a session management function network element or a first user plane function network element, where the indication information indicates that the second user plane function network element cannot meet the service.

With reference to the third aspect, in some implementations of the third aspect, the first user plane function network element is an anchor user plane function network element of the terminal device.

According to a fourth aspect, a communication apparatus is provided. The apparatus is configured to perform the method provided in the first aspect, the second aspect, or the third aspect. Specifically, the apparatus may include a unit and/or a module configured to perform the method provided in any one of the first aspect or the foregoing implementations of the first aspect, any one of the second aspect or the foregoing implementations of the second aspect, or any one of the third aspect or the foregoing implementations of the third aspect, for example, a processing unit and/or a communication unit.

In an implementation, the apparatus is a session management function network element. When the apparatus is the session management function network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the session management function network element. When the apparatus is the chip, the chip system, or the circuit used in the session management function network element, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a first user plane function network element. When the apparatus is the first user plane function network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first user plane function network element. When the apparatus is the chip, the chip system, or the circuit used in the first user plane function network element, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

In an implementation, the apparatus is a second user plane function network element. When the apparatus is the second user plane function network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second user plane function network element. When the apparatus is the chip, the chip system, or the circuit used in the second user plane function network element, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus includes: a memory, configured to store a program; and at least one processor, configured to execute the computer program or instructions stored in the memory, to perform the method provided in any one of the first aspect or the foregoing implementations of the first aspect, any one of the second aspect or the foregoing implementations of the second aspect, or any one of the third aspect or the foregoing implementations of the third aspect.

In an implementation, the apparatus is a session management function network element.

In another implementation, the apparatus is a chip, a chip system, or a circuit used in the session management function network element.

In an implementation, the apparatus is a first user plane function network element.

In another implementation, the apparatus is a chip, a chip system, or a circuit used in the first user plane function network element.

In an implementation, the apparatus is a second user plane function network element.

In another implementation, the apparatus is a chip, a chip system, or a circuit used in the second user plane function network element.

According to a sixth aspect, this application provides a processor, configured to perform the methods provided in the foregoing aspects.

Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code executed by a device, and the program code is used to perform the method provided in any one of the first aspect or the foregoing implementations of the first aspect, any one of the second aspect or the foregoing implementations of the second aspect, or any one of the third aspect or the foregoing implementations of the third aspect.

According to an eighth aspect, a computer program product including instructions is provided. When the computer program product runs on a computer, the computer is enabled to perform the method provided in any one of the first aspect or the foregoing implementations of the first aspect, any one of the second aspect or the foregoing implementations of the second aspect, or any one of the third aspect or the foregoing implementations of the third aspect.

According to a ninth aspect, a chip is provided. The chip includes a processor and a communication interface. The processor reads, through the communication interface, instructions stored in a memory, to perform the method provided in any one of the first aspect or the foregoing implementations of the first aspect, any one of the second aspect or the foregoing implementations of the second aspect, or any one of the third aspect or the foregoing implementations of the third aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the first aspect or the foregoing implementations of the first aspect, any one of the second aspect or the foregoing implementations of the second aspect, or any one of the third aspect or the foregoing implementations of the third aspect.

According to a tenth aspect, a communication system is provided, and includes the foregoing session management function network element and the foregoing first user plane function network element.

According to an eleventh aspect, a communication system is provided, and includes the foregoing session management function network element, the foregoing first user plane function network element, or the foregoing second user plane function network element.

### BRIEF DESCRIPTION OF DRAWINGS

FIG. 1 is a diagram of a network architecture;
FIG. 2 is a diagram of a 5GVN architecture;
FIG. 3 is a diagram of an N19 tunnel;
FIG. 4 is a diagram of a computing first networking architecture;
FIG. 5 is a diagram of service-based packet forwarding in a 5GS according to an embodiment;
FIG. 6 is a diagram of a communication method 600 according to an embodiment of this application;
FIG. 7 is a diagram of a communication method 700 according to an embodiment of this application;
FIG. 8 is a diagram of a communication method 800 according to an embodiment of this application;
FIG. 9 is a diagram of a communication method 900 according to an embodiment of this application;
FIG. 10 is a schematic block diagram of a communication apparatus 1000 according to an embodiment of this application;
FIG. 11 is a schematic block diagram of a communication apparatus 1100 according to an embodiment of this application;
FIG. 12 is a simplified diagram of a structure of a terminal device 1200; and
FIG. 13 is a simplified diagram of a structure of a network device 1300.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system.

First, a network architecture applicable to this application is briefly described as follows.

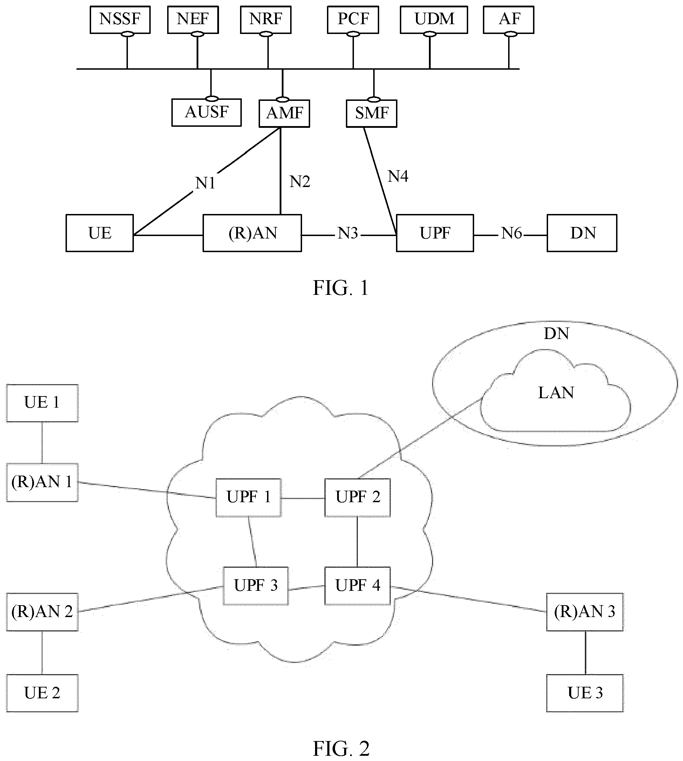

In an example, FIG. 1 is a diagram of a network architecture.

As shown in FIG. 1, a 5G system (5th generation system, 5GS) is used as an example of the network architecture. The network architecture may include but is not limited to: a network slice selection function (network slice selection function, NSSF), an authentication server function (authentication server function, AUSF), a unified data management (unified data management, UDM), a policy control function (policy control function, PCF), an application function (application function, AF), an access and mobility management function (access and mobility management function, AMF), a (radio) access network ((radio) access network, (R)AN) device, a session management function (session management function, SMF), a user equipment (user equipment, UE), a radio access network device, a user plane function (user plane function, UPF), an intermediate user plane function, a network element function access network (network element function, NEF), and a network repository function (network repository function, NRF).

The NSSF, the AUSF, the UDM, the PCF, the AF, the AMF, the SMF, and the UPF are network elements in a core network. Because the 5G system is used as an example in FIG. 1, the core network may be referred to as a 5G core network (5G core network, 5GC or 5GCN).

The core network includes a user plane network element and a control plane network element. The user plane function network element is mainly responsible for packet forwarding, quality of service (quality of service, QoS) control, charging information statistics, and the like. The control plane function network element is mainly responsible for service process interaction, delivering a data packet forwarding policy and a QoS control policy to a user plane, and the like.

The following briefly describes the network elements shown in FIG. 1.
1. The UE may be referred to as a user equipment (user equipment), a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device, another processing device connected to a wireless modem, a wearable device, a terminal device in a 5G network, a terminal device in a future evolved public land mobile network (public land mobile network, PLMN), and the like. This is not limited in this embodiment of this application.

By way of example, and not limitation, in this embodiment of this application, the terminal device may alternatively be the wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of the user. The wearable device is not merely a hardware device, but is used to implement a powerful function through software support, data exchange, and cloud interaction. In a broad sense, the wearable intelligent device includes a full-featured and large-sized device that can implement all or some functions without depending on a smartphone, for example, a smart watch or smart glasses, and includes devices that are dedicated to only one type of application function and need to collaboratively work with other devices such as smartphones, for example, various smart bands or smart jewelry for monitoring physical signs.

In addition, in this embodiment of this application, the terminal device may alternatively be a terminal device in an IoT system. IoT is an important part of future information technology development. A main technical feature of the IoT is to connect articles to a network by using a communication technology, to implement an intelligent network for human-machine interconnection and thing-thing interconnection.

It should be noted that the terminal device and the access network device may communicate with each other by using an air interface technology (for example, an NR technology or an LTE technology). Terminal devices may also communicate with each other by using an air interface technology (for example, the NR technology or the LTE technology).

In this embodiment of this application, an apparatus configured to implement a function of the terminal device may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete device.

2. The (radio) access network ((radio) access network, (R)AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses the AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), and the like. The AN device may allow interconnection and interworking to be performed between the terminal device and a 3GPP core network by using the non-3GPP technology.

The AN device is responsible for functions on an air interface side, such as radio resource management, quality of service (quality of service, QoS) management, and data compression and encryption. The AN device provides an access service for the terminal device, to complete forwarding of a control signal and user data between the terminal device and the core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an AP, a wireless relay node, a wireless backhaul node, a transmission point (transmission point, TP), or a transmission and reception point (transmission and reception point, TRP) in a Wi-Fi system; or may be a gNB or a transmission point (a TRP or a TP) in the 5G (for example, NR) system, or one antenna panel or a group of antenna panels (including a plurality of antenna panels) of a base station in the 5G system; or may be a network node that forms a gNB or a transmission point, for example, a distributed unit (distributed unit, DU) or a base station in a next generation 6G communication system. A specific technology and a specific device form that are used by the AN device are not limited in this embodiment of this application.

3. The AMF is mainly used for functions such as access control, mobility management, and attachment and detachment.

4. The SMF is mainly used for user plane network element selection, user plane network element redirection, internet protocol (internet protocol, IP) address allocation of the terminal device, session establishment, modification, and release, and QoS control.

5. The UPF is mainly used for receiving and forwarding of user plane data. For example, the UPF may receive user plane data from a DN, and send the user plane data to the terminal device via the AN device. The UPF may further receive user plane data from the terminal device via the AN device, and forward the user plane data to the DN.

6. The PCF is a policy control network element, and is configured to generate and manage a user processing policy, a session processing policy, and a QoS flow processing policy.

7. The AF is an application function, is a functional network element that provides various business services, and can interact with the core network via network capability exposure (NEF) and interact with a policy management framework for policy management.

8. The NSSF is a network slice selection function, and is mainly used for network slice selection.

9. The UDM is mainly used for subscription data management of the UE, including storage and management of a UE identifier, access authorization of the UE, and the like.

10. The NEF is a network exposure function, provides a framework, authentication, and an interface that are related to network capability exposure, and transmits information between a network function and another network function in the 5G system.

11. The AUSF is mainly used for user authentication and the like.

12. The NRF is a network repository function, and is used to perform network function (network function, NF) registration, management, and status detection, and implement automatic management of all NFs. When each NF starts, the NF needs to register with the NRF to provide a service. Registration information includes an NF type, an address, a service list, and the like.

13. The DN is a data network, and is an electronic communication process that allows orderly transmission and receiving of data, for example, a letter, a spreadsheet, and another type of document.

In the foregoing architecture, communication interfaces between the functional network elements are marked, and include the following.

N1 is an interface between the terminal UE and a control plane of the core network, and is used to transmit NAS signaling.

N2 is a communication interface between the access network element AN and the control plane of the core network.

N3 is a communication interface between the access network element AN and the user plane network element UPF of the core network, and is used to transmit user data.

N4 is a communication interface between the session management network element SMF of the control plane and the user plane network element UPF, and is used to perform policy configuration or the like on the UPF. In the network architecture shown in FIG. 1, the network elements may communicate with each other through an interface. For example, the UE is connected to the AN device by using a radio resource control (radio resource control, RRC) protocol, and the UE and the AN device communicate with each other through a Uu interface.

N6 is a communication interface between the user plane UPF and the DN.

FIG. 2 is a diagram of a 5GVN architecture. As shown in FIG. 2, UPFs are interconnected through an N19 interface. Therefore, UEs can be interconnected, and are connected to a fixed LAN through an N6 interface of a UPF, so that a mobile terminal UE communicates with a terminal in the LAN.

A 5GVN can be connected to only one LAN via a UPF. When the UPF receives a data packet, if a destination address is an address of the UE, the data packet is forwarded in the 5GVN. Otherwise, the data packet is forwarded to the UPF connected to the LAN, and then the UPF forwards the data packet to a LAN side. In addition, LAN-side processing is irrelevant to the 5GVN.

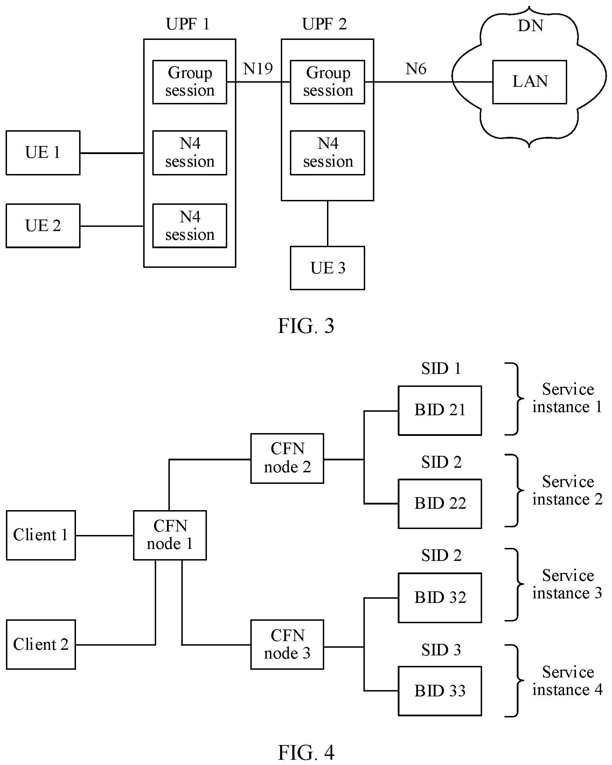

The N19 interface uses a GTP-U protocol for communication. Tunnel endpoint identifiers (tunnel endpoint identifiers, TEIDs) of the N19 interface are allocated between the UPFs at a 5GVN granularity. FIG. 3 is a diagram of an N19 tunnel. As shown in FIG. 3, in each 5GVN network, only one TEID is allocated to each UPF, and all mobile terminals belonging to the 5GVN share one TEID on the UPF. Processing between an N4 session and a group session is implemented inside the UPF. An N6 interface also uses a shared parameter. Currently, the 5GVN corresponds to a data network name/single network slice selection assistance information (DNN/S-NSSAI). It may be considered that the 5GVN uses the DNN/S-NSSAI as an identifier, to perform operations such as user management and UPF selection when the 5GVN is established.

For ease of understanding embodiments of this application, computing first networking (computing first networking, CFN) in this application is explained.

FIG. 4 is a diagram of a computing first networking architecture. As shown in FIG. 4, the CFN architecture mainly includes a CFN node (CFN node), a service instance (service instance), and a client (client). Based on packet forwarding in a conventional network, CFN can implement packet forwarding that is based on computing power and a service. The following describes terms related to the CFN.

### 1. Computing power information release

As shown in FIG. 4, there may be at least one service instance in the CFN. Service instances of a same type use a same service identity (service identity, SID) (for example, an anycast address). Each service instance has a unique binding identity (binding identity, BID) (for example, an IP address). A service SID 2 in FIG. 4 includes two service instances BID 22 and BID 32.

A computing power information release process includes the following steps:
a. A service instance releases service information to a CFN node, where the service information includes a SID, a BID, and a service status (which may be, for example, available resource information, a total resource quantity, an available resource proportion, and an available resource level) on the service instance.
b. CFN nodes release service information (for example, by using the extended border gateway protocol (BGP)), where the released service information may be SID information, a service status, and the like that are obtained by combining the service information obtained in step a by the CFN node. For example, in FIG. 4, a CFN node 2 collects, in step a, SID information and service statuses that can be provided by all connected service instances, and then the CFN node 2 sends the SID information and the service statuses to a CFN node 1 by using the extended BGP. In addition, when the service information changes, the CFN node 2 may send updated information to the CFN node 1.

### 2. Computing power selection

When receiving a service request from the client, the CFN node serves as a CFN ingress (ingress) node (where another CFN node is a CFN egress (egress) node) to select a CFN egress node based on the service information obtained in step a and step b, a network status between the CFN ingress node and the CFN egress node, and a SID requested by the client. Then, the CFN ingress node forwards the service request of the client to the selected CFN egress node. After receiving the request, the CNF egress node selects, based on the requested SID, a service instance BID corresponding to the SID, and forwards the service request.

In a process of forwarding the service request, the CFN ingress node and the CFN egress node need to record request information of a user and a corresponding forwarding rule, to use, when subsequently receiving a request of the user for a same SID, a same service instance and a same forwarding path to provide a same service and same network quality.

As shown in FIG. 4, for example, a client 1 connected to the CFN node 1 sends a service request for the SID 2. The CFN node 1 serves as a CFN ingress node (where the CFN node 2 and a CFN node 3 are CFN egress nodes), and then determines, based on service information received from the CFN node 2 and the CFN node 3, that both the CFN node 2 and the CFN node 3 can provide a service of the SID 2. Further, with reference to network status information, service statuses provided by the CFN node 2 and the CFN node 3, and a local policy of the CFN node 1, the CFN node 1 selects the CFN node 2 as a CFN egress node of the current request, and then forwards the request to the CFN node 2. After receiving the request, the CFN node 2 selects, based on locally maintained statuses of a service and a service instance, the BID 22 to provide a service for the current request, and then sends the request to the BID 22.

### 3. Computing power routing

In a process of sending a request between the CFN ingress node and the CFN egress node, routing may be specified. For example, a packet is sent based on a specified path in a segment routing IPv6 (Segment Routing IPv6, SRv6) manner.

The foregoing implementation of the CFN network is performed based on a capability of a user plane forwarding node, and is referred to as a distributed architecture. In addition, an implementation (centralized architecture) that is based on a centralized controller is further included. For example, there is a centralized control plane network element, and the control plane network element interacts with a user plane network element, so that the control plane network element obtains computing power/service information and a service status that are associated with the user plane network element, to select a service entity for the user, and generate a related forwarding policy for configuration in the user plane network element.

Currently, for a 5G network, packet forwarding between a terminal device, a device in a 5GVN, and a device in a DN can be implemented via the 5GVN. However, because packet forwarding is determined based on learning of a destination address by a UPF, or is implemented according to a static forwarding policy configured by a control plane, when service instances are distributed in a DN or UPF instance in which a plurality of UPFs are located, the 5G network can neither select a service instance based on information such as a type and a status of a service nor formulate a proper forwarding policy. Therefore, packet forwarding flexibility is poor, and there is room for further improvement in efficiency.

In view of this, this application provides a communication method, to improve the foregoing problems.

To better understand embodiments, the following several points are described herein.
1. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.
2. In embodiments of this application, a "service" represents a requirement of a terminal device, and is forwarded. In a specific implementation process, "computing power" may alternatively represent the requirement of the terminal device. The computing power may be a computing type (for example, a CPU or a GPU), a processing type (computing, storage, or the like), an algorithm requirement (for example, image recognition or content parsing), method/function call, a microservice, or the like. This is not limited herein in this application.
3. In embodiments of this application, a SID may be an identifier of the service, or may be an identifier of the "computing power". In the following embodiments, a "slice" is a network slice in a conventional technology, "a data network name/single network slice selection assistance information (Data Network Name/Single Network Slice Selection Assistance Information, DNN/S-NSSAI)" is used as a slice identifier, and a "computing power slice" is a concept of grouping or organizing computing power in this application, and may be replaced with a "computing power group"/"computing power set"/"serving slice", or the like. Specifically, related computing power may be combined for use by using a policy, and is grouped and identified by using the "computing power slice". For example, a plurality of service instances with a same computing power type are grouped into one computing power slice, or all needed computing power service instances that serve an application are grouped into one computing power slice. In addition, the computing power slice may alternatively be identified by using a computing power slice identifier.
4. In embodiments of this application, a session management function network element is not specifically an SMF, but is a network element that has a session management function or a network element that is configured to control a path. The session management function network element may be a new network element, or may be an existing network element. This is not limited herein in this application.

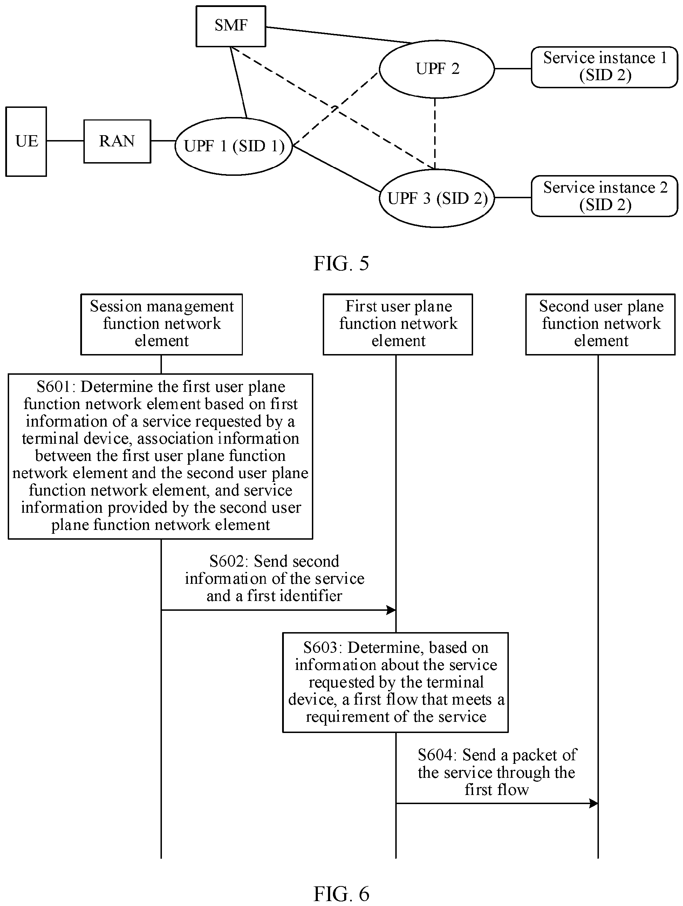

FIG. 5 is a diagram of service-based packet forwarding in a 5GS according to an embodiment. As shown in FIG. 5, a service identity of a UPF 1 is a SID 1, a service identity of a UPF 3 is a SID 2, and service identities of a service instance 1 and a service instance 2 are both the SID 2.

In a process of accessing a wireless network via a RAN, a UE may create a session between the UE and the UPF 1, and the UPF 1 is an anchor UPF or an intermediate UPF of the UE. A control plane network element (for example, an SMF) selects the UPF 1, a UPF 2, or the UPF 3 based on a slice identifier (DNN/S-NSSAI), a computing power slice identifier, or service information requested or subscribed to by a user. The control plane network element may create a tunnel corresponding to a network slice at a UE granularity, a tunnel corresponding to a computing power slice granularity, or a tunnel corresponding to a session granularity between the UPF 1 and the UPF 2 or between the UPF 1 and the UPF 3 before creating a session of the UE (where a tunnel between the UPF 2 and the UPF 3 may further be created, and this is not limited herein in this application), or may create the tunnel corresponding to the network slice at the UE granularity, the tunnel corresponding to the computing power slice granularity, or the tunnel corresponding to the session granularity between the UPF 1 and the UPF 2 or between the UPF 1 and the UPF 3 in a process of creating the session of the UE.

The terms in this application are briefly described above, and details are not described again in the following embodiments. With reference to the accompanying drawings, the following describes in detail a multicast/broadcast communication method provided in embodiments of this application. Embodiments provided in this application may be applied to the foregoing network architecture shown in FIG. 1, FIG. 2, or FIG. 5. This is not limited.

FIG. 6 is a diagram of a communication method 600 according to an embodiment of this application. As shown in FIG. 6, the method 600 may include the following steps.

S601: A session management function network element determines a first user plane function network element based on first information of a service requested by a terminal device, association information between the first user plane function network element and a second user plane function network element, and information of services provided by the second user plane function network element.

The association information between the first user plane function network element and the second user plane function network element indicates that a tunnel may be established or a tunnel has been established between the first user plane function network element and the second user plane function network element, to transmit data. The second user plane function network element supports the service. The information of the services provided by the second user plane function network element indicates the services that can be provided by the second user plane function network element, in other words, indicates a capability of the second user plane function network element to provide the services. In this embodiment of this application, the information of the services provided by the second user plane function network element indicates that the second user plane function network element supports the service.

It should be understood that, that the second user plane function network element supports the service may be understood as that the second user plane function network element has a service instance that supports the service, or may be understood as that a data network device connected to the second user plane function network element supports the service. This is not limited herein in this application.

Specifically, the session management function network element may determine the second user plane function network element based on the first information of the service and the information of the services provided by the second user plane function network element. Then, the session management function network element may determine the first user plane function network element based on the second user plane function network element and the association information between the first user plane function network element and the second user plane function network element.

Optionally, the session management function network element may determine, based on the first information of the service, information of services provided by at least one user plane function network element that can support the service. Then, the session management function network element may determine the second user plane function network element based on the information of the services provided by the at least one user plane function network element, where the at least one user plane function network element includes the second user plane network element.

Information of services provided by any one of the at least one user plane function network element includes any one or more of the following: a service type or a SID supported by the any user plane function network element, a computing power slice identifier of the any user plane function network element, whether a service or a computing power slice of the any user plane function network element is available, a load status corresponding to the service or the computing power slice of the any user plane function network element, a delay of transmitting a packet of the service by the any user plane function network element, bandwidth of transmitting the packet of the service by the any user plane function network element, or a packet loss rate of transmitting the packet of the service by the any user plane function network element.

The first information of the service may include one or more of a SID of the service, a packet feature of the service, or a computing power slice identifier of the service.

In addition, in one aspect, the session management function network element may obtain the first information of the service via the terminal device. For example, the first information of the service may be carried in a protocol data unit (protocol data unit, PDU) session creation request message sent by the terminal device. The PDU session creation request message may include the first information of the service, and may further include DNN/S-NSSAI information.

In another aspect, the session management function network element may obtain the first information of the service via a policy control function (policy control function, PCF) network element or a unified data management (unified data management, UDM) function network element. For example, in a process of creating a PDU session of the terminal device, the session management function network element may read the first information of the service from subscription data of the terminal device in the unified data management function network element.

Further, the first user plane function network element may be an anchor user plane function network element of the terminal device. The anchor user plane function network element of the terminal device may be a user plane function network element configured to allocate an address (for example, an IP address) to the terminal device.

It should be understood that, in this application, that the user plane function network element has the capability to provide the service includes that the user plane function network element has a computing power slice capability.

It should be further understood that, in the foregoing solution, there may be one or more SIDs of the service and one or more computing power slices of the service. If there is one SID of the service and one computing power slice of the service, the session management function network element may select the first user plane function network element based on the one SID or the one computing power slice identifier of the service, the association information between the first user plane function network element and the second user plane function network element, and the information of the services provided by the second user plane function network element. If there are a plurality of SIDs of the service and a plurality of computing power slices of the service, a definition manner of the computing power slice may be used, so that the plurality of SIDs of the service belong to a same computing power slice of the service or belong to the plurality of computing power slices of the service. The session management function network element may select the first user plane function network element based on the one or more computing power slice identifiers of the service, the association information between the first user plane function network element and the second user plane function network element, and the information of the services provided by the second user plane function network element.

For example, it is assumed that there is still a third user plane function network element, and both the second user plane function network element and the third user plane function network element can provide one SID or one computing power slice of the service. In this case, the first user plane function network element may be connected to or has been connected to the second user plane function network element or the third user plane function network element. Therefore, the first user plane function network element may be selected. It is assumed that the first user plane function network element can provide one SID or computing power slice that meets a part of the service, and the second user plane function network element that may be connected can provide one SID or computing power slice that meets another part of the service. In this case, the first user plane function network element may be selected. It is assumed that the first user plane function network element provides one SID or computing power slice that completely does not meet the service, and the second user plane function network element that may be connected can provide one SID or one computing power slice that completely meets the service. In this case, the first user plane function network element may also be selected.

Further, the method 600 includes: The session management function network element determines a first flow based on association information between the service and one or more flows that meet a requirement of the service, where the one or more flows include the first flow.

Specifically, the session management function network element may determine the one or more flows based on the association information between the service and the one or more flows, and then may determine, when the one or more flows meet the requirement of the service, the first flow (where for example, a flow with a long delay but a low cost may be selected as the first flow) through filtering based on a factor such as a cost requirement, a delay requirement, or a packet loss rate requirement for transmitting the packet of the service by using each flow.

The association information between the service and the one or more flows includes at least one of the following information: a correspondence between the SID of the service and a first identifier, a correspondence between the packet feature of the service and the first identifier, or a correspondence between the computing power slice identifier of the service and the first identifier.

It should be understood that, in this embodiment of this application, the one or more flows may correspond to one user plane function network element, or may correspond to a plurality of user plane function network elements. This is not limited herein in this application.

It should be further understood that if there are services requested by at least two terminal devices, for each terminal device, a flow (where in this case, the flow is at a device granularity) corresponding to the terminal device or a flow (where in this case, the flow is at a service granularity) corresponding to the service requested by the terminal device may be determined in a manner of the foregoing solution. However, the flow corresponding to the terminal device or the flow corresponding to the service requested by the terminal device may be a same flow (that is, the same flow may be used for the services of the at least two terminal devices in a reusing manner), or may be a different flow (that is, the flow corresponding to the terminal device or the flow corresponding to the service requested by the terminal device has a correspondence with the terminal device). This is not limited herein in this application.

S602: The session management function network element sends second information of the service and the first identifier to the first user plane function network element. Correspondingly, the first user plane function network element receives the second information of the service and the first identifier from the session management function network element.

The first identifier is an identifier of the first flow, the first flow meets the requirement of the service, and the first flow is in the tunnel between the first user plane function network element and the second user plane function network element. For example, that the first flow meets the requirement of the service may mean that the first flow meets the delay requirement for transmitting the packet of the service, the first flow meets the bandwidth requirement for transmitting the packet of the service, or the first flow meets the packet loss rate requirement for transmitting the packet of the service.

For example, the session management function network element may send a PDU session creation message or a PDU session request message to the first user plane function network element, where the PDU session creation message or the PDU session request message carries the second information of the service and the first identifier.

The second information of the service may include one or more of the SID of the service, the packet feature of the service, or the computing power slice identifier of the service.

It should be understood that the second information of the service may be information that is the same as or different from the first information of the service.

It should be further understood that the flow in this embodiment of this application may be a QoS flow, and the flow identifier may be a QoS flow identifier (QoS flow identifier, QFI) or a 5G QoS identifier (5G QoS identifier, 5QI).

Optionally, the session management function network element may further configure a correspondence between the SID of the service and the computing power slice of the service in the first user plane function network element, so that the first user plane function network element can determine, based on information about the service, a computing power slice corresponding to the SID of the service, and then select a corresponding flow to forward the packet of the service.

The tunnel between the first user plane function network element and the second user plane function network element may correspond to a session of the service, or may correspond to the packet feature of the service or the computing power slice of the service. Further, if there are a plurality of user plane function network elements that can establish tunnels or have established tunnels with the first user plane function network element, the first user plane function network element may use a same flow identifier (for example, the first user plane function network element uses the same flow identifier for flows in the tunnels established between the plurality of user plane function network elements and the first user plane function network element), or may use a plurality of flow identifiers (for example, the first user plane function network element uses separate flow identifiers for the flows in the tunnels established between the plurality of user plane function network elements and the first user plane function network element).

S603: The first user plane function network element determines, based on the information about the service requested by the terminal device, the first flow that meets the requirement of the service.

The information about the service may be the foregoing second information of the service.

Specifically, the first user plane function network element may determine the second user plane function network element based on the information about the service and the information of the services provided by the second user plane function network element. Then, the first user plane function network element may determine the first flow based on the association information between the service and the one or more flows. The one or more flows are in the tunnel between the first user plane function network element and the second user plane function network element, and the one or more flows include the first flow.

Further, the first user plane function network element may determine, based on the information about the service, the information of the services provided by the at least one user plane function network element that can support the service. Then, the first user plane function network element may determine the second user plane function network element based on the information of the services provided by the at least one user plane function network element, where the at least one user plane function network element includes the second user plane network element.

The information of the services provided by any one of the at least one user plane function network element includes any one or more of the following: the service type or the SID supported by the any user plane function network element, the computing power slice identifier of the any user plane function network element, whether the service or the computing power slice of the any user plane function network element is available, the load status corresponding to the service or the computing power slice of the any user plane function network element, the delay of transmitting the packet of the service by the any user plane function network element, the bandwidth of transmitting the packet of the service by the any user plane function network element, or the packet loss rate of transmitting the packet of the service by the any user plane function network element.

The association information between the service and the one or more flows may include at least one of the following information: the correspondence between the SID of the service and the first identifier, the correspondence between the packet feature of the service and the first identifier, or the correspondence between the computing power slice identifier of the service and the first identifier.

In a possible implementation, the first user plane function network element may receive the information about the service from the terminal device or the session management function network element, and the first user plane function network element may respond to a request of the session management function network element.

In another possible implementation, the first user plane function network element may be based on the information about the service and the association information between the service and the one or more flows from the session management function network element.

The association information between the service and the one or more flows may be configured in the session management function network element.

Further, the packet of the service sent by the session management function network element to the first user plane function network element may include the association information between the service and the one or more flows.

In addition, the first user plane function network element may also obtain the correspondence between the SID of the service and the computing power slice of the service based on configuration information (for example, the association information between the service and the one or more flows) received from the session management function network element or the packet of the service received from the terminal device, to first obtain the computing power slice identifier of the service based on the SID of the service, and then determine the first flow based on the computing power slice identifier of the service.

Optionally, the first user plane function network element may further select, based on the information about the service, an identifier of a flow for forwarding the packet of the service to a radio access network device and/or an identifier of a flow for receiving the packet of the service from the radio access network device.

In another possible implemented example, the method 600 further includes: The first user plane function network element stores a correspondence between the packet of the service and the first flow.

Specifically, the first user plane function network element may store the correspondence between the packet of the service and the first flow. For example, the first user plane function network element may store a correspondence between the first flow (or the first identifier) and one or more of the SID of the service, the packet feature of the service, and the computing power slice identifier of the service. Therefore, when subsequently receiving a request for a service that is the same as the service or a service whose computing power slice identifier is the same as that of the service, the first user plane function network element may forward a packet of the service in a same forwarding manner. Alternatively, when receiving a downlink packet of the service, based on the foregoing stored information and information (for example, a packet feature of the downlink packet of the service, a SID of the downlink packet of the service, or a computing power slice identifier of the downlink packet of the service) about the downlink packet of the service, the first user plane function network element may determine information about a tunnel between the first user plane function network element and the radio access network device, or determine identification information of a flow in the tunnel between the first user plane function network element and the radio access network device.

S604: The first user plane function network element sends the packet of the service to the second user plane function network element through the first flow.

Optionally, when sending the packet of the service, the first user plane function network element may add related information of the service or the service instance to the packet of the service or a packet header of a tunnel for forwarding the packet.

For example, a destination address of the packet of the service may be modified to an address of the service instance, or SID information of the service or address information of the service instance may be added to a tunnel packet header of the tunnel between the first user plane function network element and the second user plane function network element.

Optionally, the method 600 may further include: The second user plane function network element receives an uplink packet of the service from the first user plane function network element through the first flow, where the uplink packet includes information about the uplink packet. Then, the second user plane function network element may store a correspondence between the uplink packet of the service and the first flow. Next, the second user plane function network element may receive the downlink packet of the service from a service instance. Finally, the second user plane function network element may determine, based on the information about the downlink packet of the service and the correspondence between the uplink packet of the service and the first flow, a second flow associated with the first flow, and send the downlink packet of the service through the second flow.

The information about the uplink packet of the service includes one or more of a SID of the uplink packet of the service, a packet feature (for example, a source address of the terminal device or a protocol type (for example, a user datagram protocol (user datagram protocol, UDP) or a transmission control protocol (transmission control protocol, TCP))) of the uplink packet of the service, or a computing power slice identifier of the uplink packet of the service.

In addition, the downlink packet of the service may include the information about the downlink packet of the service. The information about the downlink packet of the service includes one or more of the SID of the downlink packet of the service, the packet feature (an address of a destination terminal device, a source address, an address of the service instance, a protocol type, or the like) of the downlink packet of the service, or the computing power slice identifier of the downlink packet of the service.

Specifically, the second user plane function network element may store at least one of the following information: the address of the terminal device, the packet feature (for example, information such as a 3-tuple or a 5-tuple of the packet) of the uplink packet of the service, the computing power slice identifier of the service, the SID of the service, the tunnel for transmitting the packet of the service, the correspondence between the uplink packet of the service and the first flow, and the identifier of the flow for transmitting the packet of the service. Therefore, when receiving the downlink packet of the service, the second user plane function network element may determine, based on the foregoing stored information and the information about the downlink packet of the service, information such as an identifier of a tunnel or a flow (for example, the second flow) for forwarding the downlink packet of the service.

The correspondence between the uplink packet of the service and the first flow is at least one of the following: a correspondence between the SID of the uplink packet of the service and the first identifier, a correspondence between the packet feature of the uplink packet of the service and the first identifier, or a correspondence between the computing power slice identifier of the uplink packet of the service and the first identifier, where the first identifier is the identifier of the first flow.

In addition, the uplink packet of the service is a packet of a service received by the second user plane function network element from the first user plane function network element. The downlink packet of the service is a packet of a service sent by the second user plane function network element to the first user plane function network element.

It should be understood that, in the foregoing solution, an association relationship between the first flow and the second flow may be preconfigured.

It should be further understood that, in the foregoing solution, the second flow and the first flow may be a same flow, or may be different flows. This is not limited herein in this application.

Optionally, when the second user plane function network element cannot meet the service (where for example, the second user plane function network element cannot meet the service temporarily because the second user plane function network element has a heavy load), the method 600 may further include: The session management function network element receives information indicating that the second user plane function network element cannot meet the service.

Specifically, the session management function network element may receive indication information from the first user plane function network element or the second user plane function network element, where the indication information indicates that the second user plane function network element cannot meet the service.

In one aspect, after determining that the second user plane function network element cannot meet the service, the second user plane function network element may send the indication information to the first user plane function network element, to indicate that the second user plane function network element cannot meet the service. After receiving the indication information, the first user plane function network element may send the indication information to the session management function network element. Optionally, the indication information may further indicate an identifier or an address of another available user plane function network element, and the another available user plane function network element supports the service.

In another aspect, after determining that the second user plane function network element cannot meet the service, the second user plane function network element may directly send the indication information to the session management function network element, where the indication information indicates that the second user plane function network element cannot meet the service. Optionally, the indication information may further indicate an identifier or an address of another available user plane function network element.

Optionally, the foregoing indication information may further include information (for example, information such as an address and an identifier of a new user plane function network element) about the user plane function network element, and the new user plane function network element supports the service. Alternatively, the indication information may further include information (for example, information such as an address and an identifier of a new service instance) about the new service instance, and the information about the new service instance indicates, when the first user plane network element forwards the packet to the second user plane network element, the information about the new service instance.

Further, when the session management function network element receives the indication information from the first user plane function network element or the second user plane function network element, or when the session management function network element configures a plurality of flows for transmitting the packet of the service, the method 600 further includes: The session management function network element sends the second information of the service and a third identifier to the first user plane function network element, to send the packet of the service through a third flow.

The third flow meets the requirement of the service, the third flow is in a tunnel between the first user plane function network element and the third user plane function network element, the third identifier is an identifier of the third flow, and the third user plane function network element meets the requirement of the service.

Optionally, the method 600 further includes: The session management function network element determines the third user plane function network element.

For example, the session management function network element may determine the third user plane function network element based on the first information of the service requested by the terminal device, association information between the first user plane function network element and the third user plane function network element, and information of services provided by the third user plane function network element.

The association information between the first user plane function network element and the third user plane function network element indicates that a tunnel may be established or a tunnel has been established between the first user plane function network element and the third user plane function network element, to transmit data. The third user plane function network element supports the service. The information of the services provided by the third user plane function network element indicates the services that can be provided by the third user plane function network element, in other words, indicates a capability of the third user plane function network element to provide the services. In this embodiment of this application, the information of the services provided by the third user plane function network element indicates that the third user plane function network element supports the service.

For example, the information of the services provided by the third user plane function network element may include any one or more of the following: a service type or a service identity SID supported by the third user plane function network element, a computing power slice identifier of the third user plane function network element, whether the services or a computing power slice of the third user plane function network element is available, a load status corresponding to the services or the computing power slice of the third user plane function network element, a delay of transmitting the packets of the services by the third user plane function network element, bandwidth of transmitting the packets of the services by the third user plane function network element, or a packet loss rate of transmitting the packets of the services by the third user plane function network element.

Specifically, for descriptions of determining the third user plane function network element by the session management network element, refer to the descriptions of determining the second user plane function network element by the session management network element in S601. For brevity, details are not described herein in this application.

Further, to determine the third flow, and then determine the third identifier, the method 600 includes: The session management function network element determines the third flow based on the association information between the service and the one or more flows that meet the requirement of the service. The one or more flows include the third flow.

Specifically, for descriptions of determining the third flow by the session management function network element, refer to the related descriptions of determining the first flow by the session management function network element in S601. For brevity, details are not described herein in this application.

According to the foregoing solution, the session management function network element determines the first user plane function network element based on the first information of the service, the association information between the first user plane function network element and the second user plane function network element, and the information of the services provided by the second user plane function network element. In one aspect, the session management function network element may send the second information of the service and the first identifier to the first user plane function network element, to indicate to send the packet of the service through the first flow. In another aspect, the first user plane function network element may determine, based on the information about the service requested by the terminal device, the first flow that meets the requirement of the service. In addition, when the session management function network element determines a plurality of tunnels for service transmission, or the second user plane function network element cannot meet the requirement of the service, the session management function network element may send the second information of the service and the third identifier to the first user plane function network element, to indicate to send the packet of the service through the third flow. Therefore, the session management function network element or the first user plane function network element may select a user plane network element and determine a user plane forwarding rule based on the information about the service, so that the user plane network element can be selected based on the information about the service, and the packet of the service can also be transmitted through a flow that meets the requirement of the service. This improves a situation in which it is difficult to ensure that a packet forwarding path meets the requirement of the service of the terminal device, improves packet forwarding flexibility and efficiency, and implements dynamic scheduling that is based on a combination of a service capability of a network element and a network status.

In addition, the session management function network element may receive the information indicating that the second user plane function network element cannot meet the service, select the third user plane function network element for the service, and reselect a tunnel/flow for transmitting the packet of the service, to prevent a user from perceiving a service exception.

Optionally, the second user plane function network element may store the correspondence between the packet of the service and the first flow, so that when subsequently transmitting the downlink packet of the service, the second user plane function network element can select the second flow to transmit the downlink packet of the service.

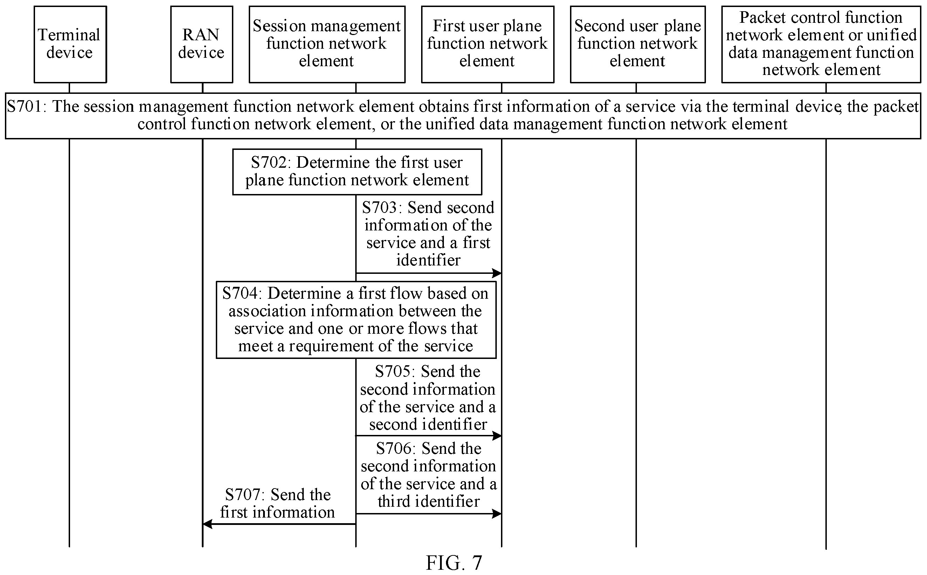

FIG. 7 is a diagram of a communication method 700 according to an embodiment of this application. As shown in FIG. 7, the method 700 may include the following steps.

S701: A session management function network element obtains first information of a service via a terminal device, a packet control function network element, or a unified data management function network element.

The first information of the service includes at least one of the following information: a SID of the service, a packet feature of the service, or a computing power slice identifier of the service, where the service is a service requested by the terminal device.

In a possible implementation, the session management function network element may receive a first message from the terminal device, to obtain information about the service. In an example, the first message may be a session creation request message.

Further, the first message may include a DNN/S-NSSAI.

In another possible implementation, the session management function network element may receive a second message from the packet control function network element or the unified data management function network element, to obtain the first information of the service.

Specifically, in a process of creating a session for the terminal device, the session management function network element obtains information about the service by receiving the second message that includes the information about the service. For example, the session management function network element may read the first information of the service from subscription data of the terminal device in the unified data management function network element.

S702: The session management function network element determines a first user plane function network element.

For example, the session management function network element may determine the first user plane function network element based on the first information of the service requested by the terminal device, association information between the first user plane function network element and a second user plane function network element, and information of services provided by the second user plane function network element.

Specifically, for descriptions of determining the first user plane function network element by the session management function network element based on the first information of the service requested by the terminal device, the association information between the first user plane function network element and the second user plane function network element, and the information of the services provided by the second user plane function network element, refer to the related descriptions of determining the first user plane function network element by the session management function network element based on the first information of the service requested by the terminal device, the association information between the first user plane function network element and the second user plane function network element, and the information of the services provided by the second user plane function network element in S601. For brevity, details are not described herein in this application.

S703: The session management function network element sends second information of the service and a first identifier to the first user plane function network element. Correspondingly, the first user plane function network element receives the second information of the service and the first identifier from the session management function network element.

The first identifier is an identifier of a first flow, the first flow meets a requirement of the service, and the first flow is in a tunnel between the first user plane function network element and the second user plane function network element.

For example, the session management function network element may send a PDU session creation message or a PDU session request message to the first user plane function network element, where the PDU session creation message or the PDU session request message carries the second information of the service and the first identifier.

The second information of the service may include one or more of the SID of the service, the packet feature of the service, or the computing power slice identifier of the service.

It should be understood that the second information of the service may be information that is the same as or different from the first information of the service.

S704: The session management function network element determines the first flow based on association information between the service and one or more flows that meet the requirement of the service.

Specifically, for descriptions of determining the first flow by the session management function network element based on the association information between the service and the one or more flows that meet the requirement of the service, refer to the related descriptions of determining the first flow by the session management function network element based on the association information between the service and the one or more flows that meet the requirement of the service in S601. For brevity, details are not described herein in this application.

Optionally, after determining the first flow, the session management function network element may further send, to the second user plane function network element, configuration information of a downlink flow associated with the first flow, where the configuration information is used by the second user plane function network element to configure the downlink flow associated with the first flow. The configuration information of the downlink flow associated with the first flow may include at least one of the following information: the SID of the service, the packet feature of the service, the computing power slice identifier of the service, the first identifier, a correspondence between the SID of the service and the first flow, a correspondence between the packet feature of the service and the first flow, or a correspondence between the computing power slice identifier of the service and the first flow. Then, when receiving a downlink packet of the service, based on the foregoing information and information (for example, a packet feature of the downlink packet of the service, a SID of the downlink packet of the service, or a computing power slice identifier of the downlink packet of the service) about the downlink packet of the service, the second user plane function network element may determine information about the tunnel between the second user plane function network element and the first user plane function network element, or determine identification information of the downlink flow associated with the first flow in the tunnel between the second user plane function network element and the first user plane function network element.

The downlink flow associated with the first flow may be a flow that is the same as the first flow, or may be a flow that is different from the first flow.

S705: The session management function network element sends second information of the service and a second identifier to the first user plane function network element. Correspondingly, the first user plane function network element receives the second information of the service and the second identifier from the session management function network element.

For example, when the session management function network element allocates a plurality of tunnels that meet the service, or when the second user plane function network element cannot meet the service of the terminal device, the session management function network element may send the second information of the service and the second identifier to the first user plane function network element.

The second identifier is an identifier of a second flow, the second flow meets the requirement of the service, and the second flow is in a tunnel between the first user plane function network element and a third user plane function network element.

Further, the session management function network element may determine the second flow based on the association information between the service and the one or more flows that meet the requirement of the service.

Specifically, for descriptions of determining the second flow by the session management function network element, refer to the related descriptions of determining the first flow by the session management function network element in S601. For brevity, details are not described herein again in this application.

Optionally, after determining the second flow, the session management function network element may further send, to the third user plane function network element, configuration information of a downlink flow associated with the second flow, where the configuration information is used by the third user plane function network element to configure the downlink flow associated with the second flow. The configuration information of the downlink flow associated with the second flow may include at least one of the following information: the SID of the service, the packet feature of the service, the computing power slice identifier of the service, the second identifier, a correspondence between the SID of the service and the second flow, a correspondence between the packet feature of the service and the second flow, or a correspondence between the computing power slice identifier of the service and the second flow. Then, when receiving the downlink packet of the service, based on the foregoing information and the information (for example, the packet feature of the downlink packet of the service, the SID of the downlink packet of the service, or the computing power slice identifier of the downlink packet of the service) about the downlink packet of the service, the third user plane function network element may determine information about the tunnel between the third user plane function network element and the first user plane function network element, or determine identification information of the downlink flow associated with the second flow in the tunnel between the third user plane function network element and the first user plane function network element.

The downlink flow associated with the second flow may be a flow that is the same as the second flow, or may be a flow that is different from the second flow.

In another possible implementation, the session management function network element may send, to the first user plane function network element, the second information of the service and the association information between the service and the one or more flows that meet the requirement of the service, so that the first user plane function network element can determine the second flow based on the second information of the service and the association information between the service and the one or more flows that meet the requirement of the service.

Specifically, for descriptions of determining the second flow by the first user plane function network element, refer to the related descriptions of determining the first flow by the first user plane function network element in S603. For brevity, details are not described herein again in this application.

It should be understood that, in the foregoing solution, in one aspect, after the session management function network element obtains the first information of the service, if a plurality of flows are established for the service, the session management function network element may need to determine the first user plane function network element based on not only the association information between the first user plane function network element and the second user plane function network element and the information of the services provided by the second user plane function network element, but also association information between the first user plane function network element and the third user plane function network element and information of services provided by the third user plane function network element. In another aspect, if the second user plane function network element cannot meet the requirement of the service in a process of transmitting the packet of the service, the session management function network element needs to determine the third user plane function network element based on the association information between the first user plane function network element and the third user plane function network element and the information of the services provided by the third user plane function network element. The association information between the first user plane function network element and the third user plane function network element indicates that a tunnel may be established or a tunnel has been established between the first user plane function network element and the third user plane function network element. The third user plane function network element supports the service. The information of the services provided by the third user plane function network element indicates that the third user plane function network element supports the service.

S706: The session management function network element sends the second information of the service and a third identifier to the first user plane function network element. Correspondingly, the first user plane function network element receives the second information of the service and the third identifier from the session management function network element.

The third identifier is an identifier of a third flow, the third flow meets the requirement of the service, and the third flow is in a tunnel between the first user plane function network element and a radio access network device.

Further, the session management function network element may determine the third flow based on the association information between the service and the one or more flows that meet the requirement of the service.

Specifically, for descriptions of determining the third flow by the session management function network element, refer to the related descriptions of determining the first flow by the session management function network element in S601. For brevity, details are not described herein again in this application.

In another possible implementation, the session management function network element may send, to the first user plane function network element, the second information of the service and the association information between the service and the one or more flows that meet the requirement of the service, so that the first user plane function network element can determine a fourth flow based on the second information of the service and the association information between the service and the one or more flows that meet the requirement of the service.

Specifically, for descriptions of determining the third flow by the first user plane function network element, refer to the related descriptions of determining the first flow by the first user plane function network element in S603. For brevity, details are not described herein again in this application.

S707: The session management function network element sends the first information to the radio access network device. Correspondingly, the radio access network device receives the first information from the session management function network element.

The first information is used to configure the third identifier and a correspondence between the service and the third identifier for the radio access network device. Therefore, the radio access network device may receive the packet of the service from the first user plane function network element through the third flow, or send the packet of the service from the terminal device to the first user plane function network element through the third flow.

Optionally, in the foregoing solution, the second user plane function network element may store information about the packet of the service and a correspondence between the packet of the service and the first flow. The third user plane function network element may store the information about the packet of the service and a correspondence between the packet of the service and the second flow.

According to the foregoing solution, the session management function network element determines the first user plane function network element based on the first information of the service, the association information between the first user plane function network element and the second user plane function network element, and the information of the services provided by the second user plane function network element. The session management function network element may send the second information of the service and the first identifier to the first user plane function network element, to indicate to send the packet of the service through the first flow. In addition, when the session management function network element determines a plurality of tunnels for service transmission, or the second user plane function network element cannot meet the requirement of the service, the session management function network element may send the second information of the service and the second identifier to the first user plane function network element, to indicate to send the packet of the service through the second flow. The session management function network element may send the second information of the service and the second identifier to the first user plane function network element, to indicate to send the packet of the service through the second flow. The session management function network element may send the second information of the service and the third identifier to the first user plane function network element, to indicate to send the packet of the service through the third flow. Therefore, the session management function network element may select a user plane network element and determine a user plane forwarding rule based on the information about the service, so that the user plane network element can be selected based on the information about the service, and the packet of the service can also be transmitted through a flow that meets the requirement of the service. This improves a situation in which it is difficult to ensure that a packet forwarding path meets the requirement of the service of the terminal device, improves packet forwarding flexibility and efficiency, and implements dynamic scheduling that is based on a combination of a service capability of a network element and a network status.

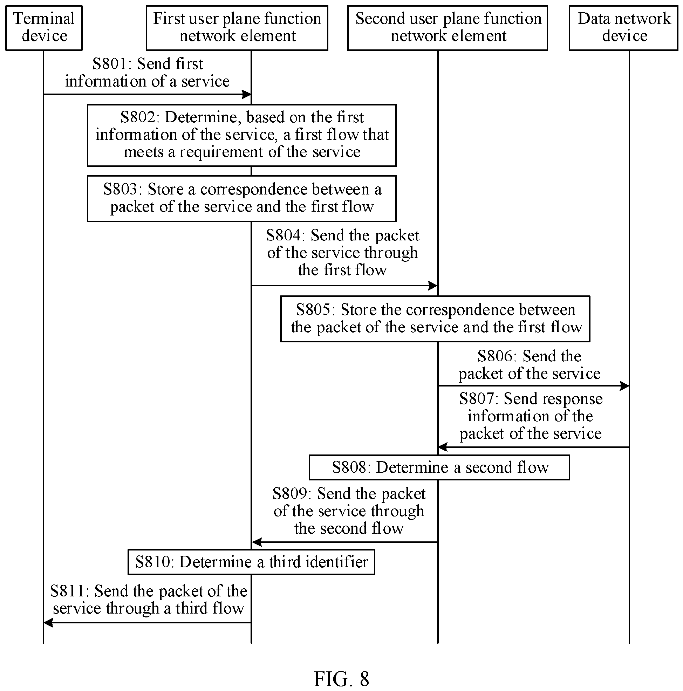

FIG. 8 is a diagram of a communication method 800 according to an embodiment of this application. As shown in FIG. 8, the method 800 may include the following steps.

S801: A terminal device sends first information of a service to a first user plane function network element. Correspondingly, the first user plane function network element receives the first information of the service from the terminal device.

The first information of the service includes at least one of the following information: a SID of a service requested by the terminal device, a packet feature of the service, or a computing power slice identifier of the service, where the service is the service requested by the terminal device.

Specifically, the terminal device may send a service request message to a radio access network device, and then the radio access network device forwards the request message through a tunnel between the radio access network device and the first user plane function network element. The request message includes the first information.

S802: The first user plane function network element determines, based on the first information of the service, a first flow that meets a requirement of the service.

Specifically, for descriptions of determining, by the first user plane function network element based on the first information of the service, the first flow that meets the requirement of the service, refer to the related descriptions of determining, by the first user plane function network element based on the information about the service requested by the terminal device, the first flow that meets the requirement of the service in S603. For brevity, details are not described herein in this application.

S803: The first user plane function network element stores a correspondence between a packet of the service and the first flow.

Specifically, the first user plane function network element may store the correspondence between the packet of the service and the first flow. For example, the first user plane function network element may store at least one of the following information: the SID of the service, the packet feature of the service, the computing power slice identifier of the service, a first identifier, a correspondence between the SID of the service and the first flow, a correspondence between the packet feature of the service and the first flow, or a correspondence between the computing power slice identifier of the service and the first flow. Therefore, when subsequently receiving a request for a service that is the same as the service or a service whose computing power slice identifier is the same as that of the service, the first user plane function network element may forward a packet of the service in a same forwarding manner. Alternatively, when receiving a downlink packet of the service, based on the foregoing stored information and information (for example, a packet feature of the downlink packet of the service, a SID of the downlink packet of the service, or a computing power slice identifier of the downlink packet of the service) about the downlink packet of the service, the first user plane function network element may determine information about the tunnel between the first user plane function network element and the radio access network device, or determine identification information of a flow in the tunnel between the first user plane function network element and the radio access network device.

S804: The first user plane function network element sends the packet of the service to a second user plane function network element through the first flow. Correspondingly, the second user plane function network element receives the packet of the service from the first user plane function network element through the first flow.

Optionally, the packet of the service may include the first identifier, or indicate the first identifier in a protocol (for example, a GTP-U protocol) header of a tunneling between the first user plane function network element and the second user plane function network element.

S805: The second user plane function network element stores the correspondence between the packet of the service from the first user plane function network element and the first flow.

Specifically, the second user plane function network element may store at least one of the following information: an address of the terminal device, a packet feature (for example, information such as a 3-tuple or a 5-tuple of a packet) of an uplink packet of the service, the computing power slice identifier of the service, the SID of the service, a tunnel for transmitting the packet of the service, a correspondence between the uplink packet of the service and the first flow, and an identifier of a flow for transmitting the packet of the service. Therefore, when receiving the downlink packet of the service, the second user plane function network element may determine, based on the foregoing stored information and the information about the downlink packet of the service, information such as an identifier of a tunnel or a flow (for example, a second flow) for forwarding the downlink packet of the service.

The correspondence between the uplink packet of the service and the first flow is at least one of the following: a correspondence between a SID of the uplink packet of the service and the first identifier, a correspondence between the packet feature of the uplink packet of the service and the first identifier, or a correspondence between a computing power slice identifier of the uplink packet of the service and the first identifier, where the first identifier is an identifier of the first flow.

In addition, the uplink packet of the service is a packet of the service received by the second user plane function network element from the first user plane function network element. The downlink packet of the service is a packet of the service sent by the second user plane function network element to the first user plane function network element.

S806: The second user plane function network element sends the packet of the service to a data network device. Correspondingly, the data network device receives the packet of the service from the second user plane function network element.

S807: The data network device sends response information of the packet of the service to the second user plane function network element. Correspondingly, the second user plane function network element receives the response information of the packet of the service from the data network device.

S808: The second user plane function network element determines the second flow.

Specifically, the second user plane function network element may determine, based on the information about the downlink packet of the service and the correspondence between the uplink packet of the service and the first flow, the second flow associated with the first flow.

Further, the second user plane function network element may store the correspondence between the packet of the service and the first flow, so that when subsequently transmitting a packet of a service with a same SID or a same computing power slice identifier of the terminal device (or a user) or receiving a downlink packet of the service, the second user plane function network element can select the second flow corresponding to the first flow to transmit the packet of the service.

It should be understood that, in the foregoing solution, an association relationship between the first flow and the second flow may be preconfigured.

It should be further understood that, in the foregoing solution, the second flow and the first flow may be a same flow, or may be different flows. This is not limited herein in this application.

S809: The second user plane function network element sends the packet of the service to the first user plane function network element through the second flow. Correspondingly, the first user plane function network element receives the packet of the service from the second user plane function network element through the second flow.

S810: The first user plane function network element determines a third identifier.

The third identifier is an identifier of a third flow, the third flow is in the tunnel between the first user plane function network element and the radio access network device, and the third flow meets the requirement of the service.

Specifically, after receiving the packet of the service through the second flow, the first user plane function network element may determine the tunnel between the first user plane function network element and the radio access network device based on the information about the packet of the service and the stored correspondence between the packet of the service and the first flow, based on the information about the packet of the service and information (which may include the third identifier, or may include association information between the service and one or more flows, where the association information between the service and the one or more flows may include one or more of a correspondence between the SID of the service and the third identifier, a correspondence between the computing power slice identifier of the service and the third identifier, or a correspondence between the packet feature of the service and the third identifier) that is from a session management function network element and that is used to configure the third flow, or based on computing power slice identifier information of the service, and then determine the third flow and the third identifier.

S811: The first user plane function network element sends the packet of the service to the radio access network device through the third flow.

According to the foregoing solution, the first user plane function network element may determine, based on the information about the service requested by the terminal device, the first flow and the third flow that meet the requirement of the service. Therefore, the packet of the service may be transmitted through a flow that meets the requirement of the service. This improves a situation in which it is difficult to ensure that a packet forwarding path meets the requirement of the service of the terminal device, improves packet forwarding flexibility and efficiency, and implements dynamic scheduling that is based on a combination of a service capability of a network element and a network status.

In addition, the first user plane function network element may store the correspondence between the packet of the service and the first flow, so that a same forwarding manner may be used when a service whose packet feature is the same as that of the service is subsequently encountered. In addition, the second user plane function network element may store the correspondence between the packet of the service and the first flow. When receiving the downlink packet of the service, the second user plane function network element may further determine, based on the stored information and the correspondence between the packet feature of the service and the first flow, an identifier of a tunnel or a flow (for example, the second flow) for sending the downlink packet of the service to the first user plane function network element.

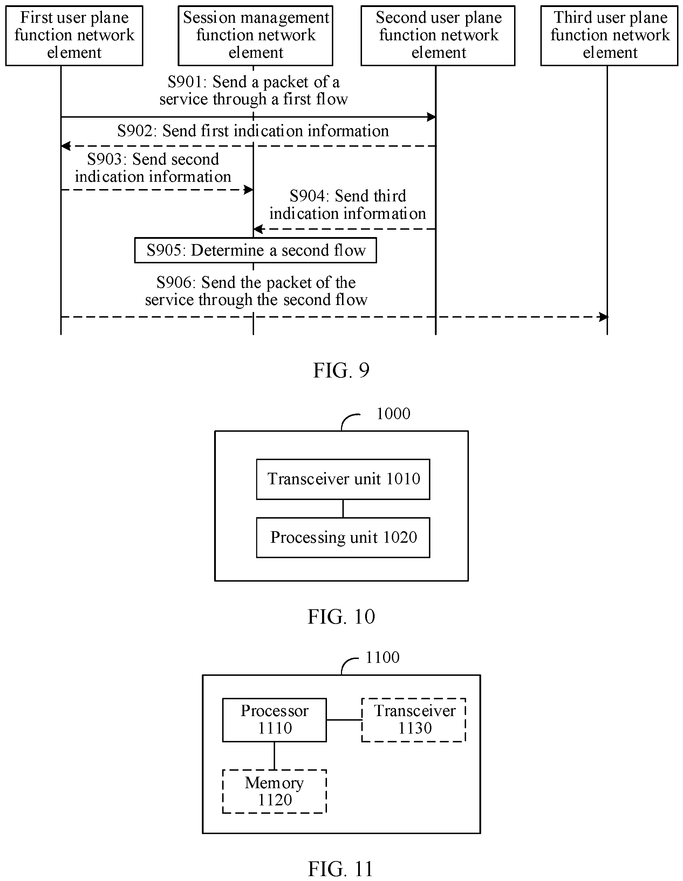

FIG. 9 is a diagram of a communication method 900 according to an embodiment of this application. As shown in FIG. 9, the method 900 may include the following steps.

S901: A first user plane function network element sends a packet of a service to a second user plane function network element through a first flow. Correspondingly, the second user plane function network element receives the packet of the service from the first user plane function network element through the first flow.

The service is a service requested by a terminal device, the first flow meets a requirement of the service, the first flow is in a tunnel between the first user plane function network element and the second user plane function network element, and the second user plane function network element supports the service.

S902: The second user plane function network element sends first indication information to the first user plane function network element. Correspondingly, the first user plane function network element receives the first indication information from the second user plane function network element.

When the second user plane function network element detects that the second user plane function network element cannot meet the service (where for example, the second user plane function network element is overloaded or a service status is unavailable), the second user plane function network element may send the first indication information to the first user plane function network element, where the first indication information indicates that the second user plane function network element cannot meet the service.

Optionally, the first indication information may further include information (for example, information such as an address and an identifier of a new user plane function network element) about the user plane function network element, and the new user plane function network element supports the service.

S903: The first user plane function network element sends second indication information to a session management function network element. Correspondingly, the session management function network element receives the second indication information from the first user plane function network element.

After receiving the first indication information from the second user plane function network element, the first user plane function network element may send the second indication information to the session management function network element, where the second indication information indicates that the second user plane function network element cannot meet the service.

Optionally, the second indication information may further include information (for example, information such as an address and an identifier of a new user plane function network element) about the user plane function network element, and the new user plane function network element supports the service. Alternatively, the second indication information may further include information (for example, information such as an address and an identifier of a new service instance) about the new service instance, and the information about the new service instance indicates, when the first user plane network element forwards the packet to the second user plane network element, the information about the new service instance.

S904: The second user plane function network element sends third indication information to the session management function network element. Correspondingly, the session management function network element receives the third indication information from the second user plane function network element.

When the second user plane function network element detects that the second user plane function network element cannot meet the service (where for example, the second user plane function network element is overloaded or the service status is unavailable), the second user plane function network element may send the third indication information to the session management function network element, where the third indication information indicates that the second user plane function network element cannot meet the service.

Optionally, the third indication information may further include information (for example, information such as an address and an identifier of a new user plane function network element) about the user plane function network element, and the new user plane function network element supports the service. Alternatively, the third indication information may further include information (for example, information such as an address and an identifier of a new service instance) about the new service instance, and the information about the new service instance indicates, when the first user plane network element forwards the packet to the second user plane network element, the information about the new service instance.

It should be understood that, in the foregoing solution, if only S902 and S903 are performed, S904 may not be performed. If S904 is performed, S902 and S903 may not be performed.

S905: The session management function network element determines a second flow.

For example, after receiving the second indication information or the third indication information, the session management function network element may determine that the second flow transmits the packet of the service. The second flow is in a tunnel between the first user plane function network element and a third user plane function network element, the third user plane function network element supports the service, and a tunnel may be established or a tunnel has been established between the third user plane function network element and the first user plane function network element.

Specifically, for descriptions of determining the third flow by the session management function network element, refer to the related descriptions of determining the first flow by the session management function network element in S602. For brevity, details are not described herein in this application.

Optionally, the session management function network element may alternatively not determine the second flow, and send, to the first user plane function network element, information for configuring the second flow, so that the first user plane function network element configures the second flow.

It should be understood that, in the foregoing technical solution, after receiving the first indication information, the first user plane function network element may alternatively determine a third flow. For details, refer to the related descriptions of determining the first flow by the first user plane function network element in S603. For brevity, details are not described herein in this application.

S906: The first user plane function network element sends the packet of the service to the third user plane function network element through the second flow. Correspondingly, the third user plane function network element receives, through the second flow, the packet of the service sent by a first user plane function network element.

According to the foregoing solution, the session management function network element or the first user plane function network element may receive information indicating that the second user plane function network element cannot meet the service, and select a new flow for the service. Alternatively, the session management function network element may indicate the first user plane function network element to select a new flow for service transmission. In this way, a phenomenon that a transmission exception on the packet of the service is caused because a user plane function network element cannot meet the requirement of the service is improved, and a user is prevented from perceiving a service exception.

Embodiments described in this specification may be independent solutions, or may be combined based on internal logic. All these solutions fall within the protection scope of this application.

It may be understood that, in the foregoing method embodiments, methods and operations implemented by the terminal device may alternatively be implemented by a component (for example, a chip or a circuit) that can be used in the terminal device, and methods and operations implemented by the network device may alternatively be implemented by a component (for example, a chip or a circuit) that can be used in the network device.

The methods provided in embodiments of this application are described above in detail with reference to FIG. 6 to FIG. 9. Communication apparatuses provided in embodiments of this application are described below in detail with reference to FIG. 10 to FIG. 13. It should be understood that the descriptions of the apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element, for example, a transmit end device or a receive end device, includes a corresponding hardware structure and/or software module for performing the functions. A person skilled in the art may be aware that, in combination with examples of units and algorithm steps described in embodiments disclosed in this specification, this application can be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, division into functional modules may be performed on the transmit end device or the receive end device based on the foregoing method examples. For example, division into each functional module may be performed based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used. An example in which division into each functional module is performed based on each corresponding function is used below for description.

FIG. 10 is a schematic block diagram of a communication apparatus 1000 according to an embodiment of this application. The communication apparatus 1000 includes a transceiver unit 1010 and a processing unit 1020. The transceiver unit 1010 may implement a corresponding communication function, and the processing unit 1020 is configured to perform data processing. The transceiver unit 1010 may also be referred to as a communication interface or a communication unit.

Optionally, the communication apparatus 1000 may further include a storage unit. The storage unit may be configured to store instructions and/or data. The processing unit 1020 may read the instructions and/or the data in the storage unit, to enable the communication apparatus to implement the foregoing method embodiments.

The communication apparatus 1000 may be configured to perform an action performed by the terminal device in the foregoing method embodiments. In this case, the communication apparatus 1000 may be a terminal device or a component that can be configured in the terminal device. The transceiver unit 1010 is configured to perform a transceiver-related operation on a terminal device side in the foregoing method embodiments. The processing unit 1020 is configured to perform a processing-related operation of the terminal device side in the foregoing method embodiments.

Alternatively, the communication apparatus 1000 may be configured to perform an action performed by the network device in the foregoing method embodiments. In this case, the communication apparatus 1000 may be a network device or a component that can be configured in the network device. The transceiver unit 1010 is configured to perform a transceiver-related operation on a network device side in the foregoing method embodiments. The processing unit 1020 is configured to perform a processing-related operation on the network device side in the foregoing method embodiments.

In a design, the communication apparatus 1000 is configured to perform an action performed by the terminal device in the embodiment shown in FIG. 7, where the transceiver unit 1010 is configured to perform S701.

In an example, the communication apparatus 1000 is configured to perform actions performed by the terminal device in the embodiment shown in FIG. 8, where the transceiver unit 1010 is configured to perform S801 and S811.

The communication apparatus 1000 may implement corresponding steps or procedures performed by the terminal device in the method 700 and the method 800 according to embodiments of this application. The communication apparatus 1000 may include units configured to perform methods performed by the terminal device in the method 700 in FIG. 7 and the method 800 in FIG. 8. In addition, the units in the communication apparatus 1000 and the foregoing other operations and/or functions are respectively for implementing corresponding procedures of the method 700 in FIG. 7 and the method 800 in FIG. 8.

It should be understood that specific processes in which the units perform the foregoing corresponding steps are described in detail in the foregoing method embodiments. For brevity, details are not described herein again.

In another design, the communication apparatus 1000 is configured to perform actions performed by the session management function network element entity in the embodiment shown in FIG. 6, where the transceiver unit 1010 is configured to perform S602, and the processing unit 1020 is configured to perform S601.

In an example, the communication apparatus 1000 is configured to perform actions performed by the session management function network element entity in the embodiment shown in FIG. 7, where the transceiver unit 1010 is configured to perform S701, S703, S705, S706, and S707, and the processing unit 1020 is configured to perform S702 and S704.

In another example, the communication apparatus 1000 is configured to perform actions performed by the session management function network element entity in the embodiment shown in FIG. 9, where the transceiver unit 1010 is configured to perform S903 and S904, and the processing unit 1020 is configured to perform S905.

The communication apparatus 1000 may implement corresponding steps or procedures performed by the session management function network element entity in the method 600, the method 700, and the method 900 according to embodiments of this application. The communication apparatus 1000 may include units configured to perform methods performed by the session management function network element entity in the method 600 in FIG. 6, the method 700 in FIG. 7, and the method 900 in FIG. 9. In addition, the units in the communication apparatus 1000 and the foregoing other operations and/or functions are respectively for implementing corresponding procedures of the method 600 in FIG. 6, the method 700 in FIG. 7, and the method 900 in FIG. 9.

In another design, the communication apparatus 1000 is configured to perform actions performed by the first user plane function network element in the embodiment shown in FIG. 6, where the transceiver unit 1010 is configured to perform S602, and the processing unit 1020 is configured to perform S603.

In an example, the communication apparatus 1000 is configured to perform actions performed by the first user plane function network element in the embodiment shown in FIG. 7, where the transceiver unit 1010 is configured to perform S703, S705, and S706.

In another example, the communication apparatus 1000 is configured to perform actions performed by the first user plane function network element in the embodiment shown in FIG. 8, where the transceiver unit 1010 is configured to perform S801, S804, S809, and S811, and the processing unit 1020 is configured to perform S802, S803, and S810.

In another example, the communication apparatus 1000 is configured to perform actions performed by the first user plane function network element in the embodiment shown in FIG. 9, where the transceiver unit 1010 is configured to perform S901 to S903, and S906.

The communication apparatus 1000 may implement corresponding steps or procedures performed by the first user plane function network element in the method 600 to the method 900 according to embodiments of this application. The communication apparatus 1000 may include units configured to perform methods performed by the first user plane function network element in the method 600 in FIG. 6 to the method 900 in FIG. 9. In addition, the units in the communication apparatus 1000 and the foregoing other operations and/or functions are respectively for implementing corresponding procedures of the method 600 in FIG. 6 to the method 900 in FIG. 9.

In another design, the communication apparatus 1000 is configured to perform an action performed by the second user plane function network element in the embodiment shown in FIG. 6, where the transceiver unit 1010 is configured to perform S604.

In another example, the communication apparatus 1000 is configured to perform actions performed by the second user plane function network element in the embodiment shown in FIG. 8, where the transceiver unit 1010 is configured to perform S804, S806, S807, and S809, and the processing unit 1020 is configured to perform S805, S806, and S808.

In another example, the communication apparatus 1000 is configured to perform actions performed by the second user plane function network element in the embodiment shown in FIG. 9, where the transceiver unit 1010 is configured to perform S901, S902, and S904.

The communication apparatus 1000 may implement corresponding steps or procedures performed by the second user plane function network element in the method 600 to the method 900 according to embodiments of this application. The communication apparatus 1000 may include units configured to perform methods performed by the second user plane function network element in the method 600 in FIG. 6 to the method 900 in FIG. 9. In addition, the units in the communication apparatus 1000 and the foregoing other operations and/or functions are respectively for implementing corresponding procedures of the method 600 in FIG. 6 to the method 900 in FIG. 9.

The processing unit 1020 in the foregoing embodiments may be implemented by at least one processor or a processor-related circuit. The transceiver unit 1010 may be implemented by a transceiver or a transceiver-related circuit. The transceiver unit 1010 may also be referred to as a communication unit or a communication interface. The storage unit may be implemented by at least one memory.

As shown in FIG. 11, an embodiment of this application further provides a communication apparatus 1100. The communication apparatus 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120, to enable the methods in the foregoing method embodiments to be performed.

Optionally, the communication apparatus 1100 includes one or more processors 1110.

Optionally, as shown in FIG. 11, the communication apparatus 1100 may further include the memory 1120.

Optionally, the communication apparatus 1100 may include one or more memories 1120.

Optionally, the memory 1120 and the processor 1110 may be integrated together, or separately disposed.

Optionally, as shown in FIG. 11, the communication apparatus 1100 may further include a transceiver 1130, and the transceiver 1130 is configured to receive and/or send a signal. For example, the processor 1110 is configured to control the transceiver 1130 to receive and/or send the signal.

In a solution, the communication apparatus 1100 is configured to implement operations performed by the terminal device in the foregoing method embodiments.

For example, the processor 1110 is configured to implement a processing-related operation performed by the terminal device in the foregoing method embodiments, and the transceiver 1130 is configured to implement a transceiver-related operation performed by the terminal device in the foregoing method embodiments.

In another solution, the communication apparatus 1100 is configured to implement operations performed by the network device in the foregoing method embodiments.

For example, the processor 1110 is configured to implement a processing-related operation performed by the network device in the foregoing method embodiments, and the transceiver 1130 is configured to implement a transceiver-related operation performed by the network device in the foregoing method embodiments.

An embodiment of this application further provides a communication apparatus 1200. The communication apparatus 1200 may be a terminal device or may be a chip. The communication apparatus 1200 may be configured to perform operations performed by the terminal device in the foregoing method embodiments.

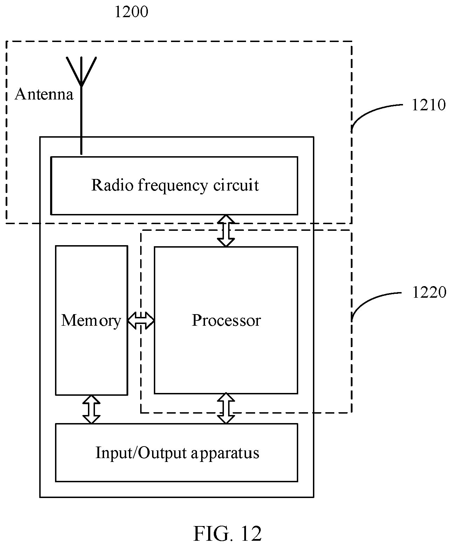

When the communication apparatus 1200 is the terminal device, FIG. 12 is a simplified diagram of a structure of a terminal device 1200. As shown in FIG. 12, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data. For ease of description, FIG. 12 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 12, the terminal device includes a transceiver unit 1210 and a processing unit 1220. The transceiver unit 1210 may also be referred to as a transceiver, a transceiver machine, a transceiver apparatus, or the like. The processing unit 1220 may also be referred to as a processor, a processing board, a processing module, a processing apparatus, or the like.

Optionally, a device configured to implement a receiving function in the transceiver unit 1210 may be considered as a receiving unit, and a device configured to implement a sending function in the transceiver unit 1210 may be considered as a sending unit. That is, the transceiver unit 1210 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that FIG. 12 is merely an example instead of a limitation, and the foregoing terminal device including the transceiver unit and the processing unit may not depend on the structure shown in FIG. 12.

When the communication apparatus 1200 is the chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a communication apparatus 1300. The communication apparatus 1300 may be a session management function network element entity, a first user plane function network element, or a second user plane function network element, or may be a chip. The communication apparatus 1300 may be configured to perform operations performed by the session management function network element entity, the first user plane function network element, or the second user plane function network element in the foregoing method embodiments.

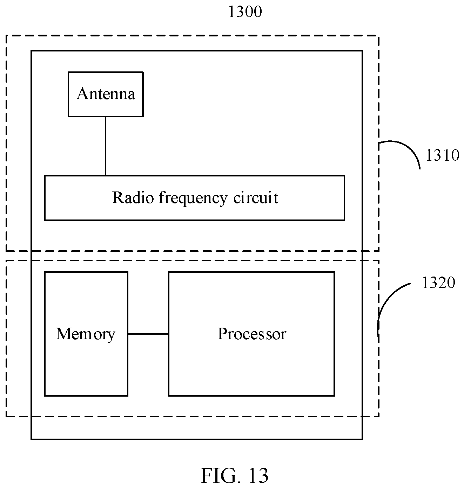

When the communication apparatus is a network device, for example, a base station, FIG. 13 is a simplified diagram of a structure of a network device 1300. The network device may be a session management function network element entity, a first user plane function network element, or a second user plane function network element. Apart 1310 and a part 1320 are included. The part 1310 is mainly used to receive and send a radio frequency signal and perform conversion between the radio frequency signal and a baseband signal. The part 1320 is mainly used to perform baseband processing, control the base station, and the like. The part 1310 may be usually referred to as a transceiver unit, a transceiver machine, a transceiver circuit, a transceiver, or the like. The part 1320 is usually a control center, and may be usually referred to as a processing unit configured to control execution of a processing operation on a side of the session management function network element entity, the first user plane function network element, or the second user plane function network element in the foregoing method embodiments.

The transceiver unit in the part 1310 may also be referred to as a transceiver machine, a transceiver, or the like. The transceiver unit includes an antenna and a radio frequency circuit. The radio frequency circuit is mainly configured to perform radio frequency processing. Optionally, a device configured to implement a receiving function in the part 1310 may be considered as a receiving unit, and a device configured to implement a sending function may be considered as a sending unit. That is, the part 1310 includes the receiving unit and the sending unit. The receiving unit may also be referred to as a receiver machine, a receiver, a receiver circuit, or the like, and the sending unit may be referred to as a transmitter machine, a transmitter, a transmitter circuit, or the like.

The part 1320 may include one or more boards, and each board may include one or more processors and one or more memories. The processor is configured to read and execute a program in the memory to implement a baseband processing function and control the base station. If there are a plurality of boards, the boards may be interconnected to enhance a processing capability. In an optional implementation, alternatively, the plurality of boards may share one or more processors, the plurality of boards may share one or more memories, or the plurality of boards may share one or more processors at the same time.

For example, in an implementation, the transceiver unit in the part 1310 is configured to perform transceiver-related steps performed by the session management function network element entity in the embodiments shown in FIG. 6, FIG. 7, and FIG. 9. The part 1320 is used to perform processing-related steps performed by the session management function network element entity in the embodiments shown in FIG. 6, FIG. 7, and FIG. 9.

For example, in another implementation, the transceiver unit in the part 1310 is configured to perform transceiver-related steps performed by the first user plane function network element in the embodiments shown in FIG. 6 to FIG. 9. The part 1320 is used to perform processing-related steps performed by the first user plane function network element in the embodiments in FIG. 6 to FIG. 9.

For example, in still another implementation, the transceiver unit in the part 1310 is configured to perform transceiver-related steps performed by the second user plane function network element in the embodiments shown in FIG. 6 to FIG. 9. The part 1320 is used to perform processing-related steps performed by the second user plane function network element in the embodiments in FIG. 6 to FIG. 9.

It should be understood that FIG. 13 is merely an example instead of a limitation, and the foregoing network device including the transceiver unit and the processing unit may not depend on the structure shown in FIG. 13.

When the communication apparatus 1300 is the chip, the chip includes a transceiver unit and a processing unit. The transceiver unit may be an input/output circuit or a communication interface. The processing unit is a processor, a microprocessor, or an integrated circuit that is integrated on the chip.

An embodiment of this application further provides a computer-readable storage medium. The computer-readable storage medium stores computer instructions used to implement methods performed by the session management function network element, methods performed by the first user plane function network element, or methods performed by the second user plane function network element in the foregoing method embodiments.

For example, when the computer program is executed by a computer, the computer is enabled to implement the methods performed by the session management function network element, the methods performed by the first user plane function network element, or the methods performed by the second user plane function network element in the foregoing method embodiments.

An embodiment of this application further provides a computer program product including instructions. When the instructions are executed by a computer, the computer is enabled to implement methods performed by the session management function network element, methods performed by the first user plane function network element, or methods performed by the second user plane function network element in the foregoing method embodiments.

An embodiment of this application further provides a communication system. The communication system includes the session management function network element and the first user plane function network element in the foregoing embodiments.

An embodiment of this application further provides a communication system. The communication system includes the session management function network element, the terminal device, and the second user plane function network element in the foregoing embodiments.

It may be clearly understood by a person skilled in the art that, for convenient and brief description, for explanations and beneficial effects of related content in any communication apparatus provided above, refer to the corresponding method embodiments provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device, a network device, or a functional module that can invoke and execute the program in the terminal device or the network device.

Aspects or features of this application may be implemented as a method, an apparatus, or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device, for example, a server or a data center, integrating one or more usable media. The usable medium (or the computer-readable medium) may include, for example, but is not limited to: various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash memory device (for example, an erasable programmable read-only memory (erasable programmable read-only memory, EPROM), a card, a stick, or a key drive), or a semiconductor medium (for example, a solid-state drive (solid-state drive, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable medium" may include but is not limited to: a radio channel and various other media that can store, include, and/or carry instructions and/or data.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include but not limited to these memories and any memory of another proper type.

In several embodiments provided in this application, it should be understood that the disclosed apparatuses and methods may be implemented in other manners. For example, the foregoing described apparatus embodiments are merely examples. For example, division into the foregoing units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The foregoing units described as separate parts may or may not be physically separate, and parts displayed as units may or may not be physical units, that is, may be located in one location, or may be distributed on a plurality of network units. Some or all of the units may be selected according to actual needs to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof.

When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and the specification.

## Claims

1. A communication method, comprising:
determining, by a session management function network element, a first user plane function network element based on first information of a service requested by a terminal device, association information between the first user plane function network element and a second user plane function network element, and information of services provided by the second user plane function network element, wherein the second user plane function network element supports the service; and
sending, by the session management function network element, second information of the service and a first identifier to the first user plane function network element, to indicate to send a packet of the service through a first flow, wherein the first identifier is an identifier of the first flow, the first flow meets a requirement of the service, and the first flow is in a tunnel between the first user plane function network element and the second user plane function network element.

2. The method according to claim 1, wherein the determining, by a session management function network element, a first user plane function network element based on first information of a service requested by a terminal device, association information between the first user plane function network element and a second user plane function network element, and information of services provided by the second user plane function network element comprises:
determining, by the session management function network element, the second user plane function network element based on the first information of the service and the information of the services provided by the second user plane function network element; and
determining the first user plane function network element based on the association information between the first user plane function network element and the second user plane function network element.

3. The method according to claim 2, wherein the determining, by the session management function network element, the second user plane function network element based on the first information of the service and the information of the services provided by the second user plane function network element comprises:
determining, by the session management function network element based on the first information of the service, information of services provided by at least one user plane function network element that can support the service; and
determining, by the session management function network element, the second user plane function network element based on the information of the services provided by the at least one user plane function network element, wherein the at least one user plane function network element comprises the second user plane function network element.

4. The method according to claim 3, wherein the method further comprises:
determining, by the session management function network element, the first flow based on association information between the service and one or more flows that meet the requirement of the service, wherein the one or more flows are in the tunnel between the first user plane function network element and the second user plane function network element, and the one or more flows comprise the first flow.

5. The method according to claim 4, wherein the association information between the service and the one or more flows comprises at least one of the following information:
a correspondence between a SID of the service and the first identifier, a correspondence between a packet feature of the service and the first identifier, or a correspondence between a computing power slice identifier of the service and the first identifier.

6. The method according to any one of claims 3 to 5, wherein information of services provided by any one of the at least one user plane function network element comprises any one or more of the following: a service type or a service identity SID supported by the any user plane function network element, a computing power slice identifier of the any user plane function network element, whether the services or a computing power slice of the any user plane function network element is available, a load status corresponding to the services or the computing power slice of the any user plane function network element, a delay of transmitting packets of the services by the any user plane function network element, bandwidth of transmitting the packets of the services by the any user plane function network element, or a packet loss rate of transmitting the packets of the services by the any user plane function network element.

7. The method according to any one of claims 1 to 6, wherein the first information of the service and the second information of the service each comprises one or more of the SID of the service, the packet feature of the service, or the computing power slice identifier of the service.

8. The method according to any one of claims 1 to 7, wherein the method further comprises:
receiving, by the session management function network element, indication information from the first user plane function network element or the second user plane function network element, wherein the indication information indicates that the second user plane function network element cannot meet the service.

9. The method according to claim 8, wherein the method further comprises:
sending, by the session management function network element, the second information of the service and a second identifier to the first user plane function network element, to send the packet of the service through a second flow, wherein the second flow meets the requirement of the service, the second identifier is an identifier of the second flow, the second flow is in a tunnel between the first user plane function network element and a third user plane function network element, and the third user plane function network element supports the service.

10. The method according to any one of claims 1 to 9, wherein the method further comprises:
receiving, by the session management function network element, the first information of the service from the terminal device, a policy control function network element, or a unified data management function network element.

11. The method according to any one of claims 1 to 10, wherein the first user plane function network element is an anchor user plane function network element of the terminal device.

12. A communication method, comprising:
determining, by a first user plane function network element based on information about a service requested by a terminal device, a first flow that meets a requirement of the service, wherein the first flow is in a tunnel between the first user plane function network element and a second user plane function network element, and the second user plane function network element supports the service; and
sending, by the first user plane function network element, a packet of the service to the second user plane function network element through the first flow.

13. The method according to claim 12, wherein the determining, by a first user plane function network element based on information about a service requested by a terminal device, a first flow that meets a requirement of the service comprises:
determining, by the first user plane function network element, the second user plane function network element based on the information about the service and information of services provided by the second user plane function network element; and
determining, by the first user plane function network element, the first flow based on association information between the service and one or more flows, wherein the one or more flows are in the tunnel between the first user plane function network element and the second user plane function network element, and the one or more flows comprise the first flow.

14. The method according to claim 13, wherein the determining, by the first user plane function network element, the second user plane function network element based on the information about the service and information of services provided by the second user plane function network element comprises:
determining, by the first user plane function network element based on the information about the service, information of services provided by at least one user plane function network element that can support the service; and
determining, by the first user plane function network element, the second user plane function network element based on the information of the services provided by the at least one user plane function network element, wherein the at least one user plane function network element comprises the second user plane network element.

15. The method according to claim 14, wherein information of services provided by any one of the at least one user plane function network element comprises any one or more of the following:
a service type or a SID supported by the any user plane function network element, a computing power slice identifier of the any user plane function network element, whether the services or a computing power slice of the any user plane function network element is available, a load status corresponding to the services or the computing power slice of the any user plane function network element, a delay of transmitting packets of the services by the any user plane function network element, bandwidth of transmitting the packets of the services by the any user plane function network element, or a packet loss rate of transmitting the packets of the services by the any user plane function network element.

16. The method according to any one of claims 13 to 15, wherein the association information between the service and the one or more flows is configured in the first user plane function network element.

17. The method according to any one of claims 13 to 15, wherein the method further comprises:
receiving, by the first user plane function network element, the association information between the service and the one or more flows from the terminal device or a session management function network element.

18. The method according to claim 17, wherein the packet of the service comprises the association information between the service and the one or more flows.

19. The method according to any one of claims 13 to 18, wherein the association information between the service and the one or more flows comprises at least one of the following information:
a correspondence between a SID of the service and a first identifier, a correspondence between a packet feature of the service and the first identifier, or a correspondence between a computing power slice identifier of the service and the first identifier.

20. The method according to any one of claims 12 to 19, wherein the information about the service comprises one or more of the SID of the service, the packet feature of the service, or the computing power slice identifier of the service.

21. The method according to any one of claims 12 to 20, wherein the method further comprises:
receiving, by the first user plane function network element, indication information from the second user plane function network element, wherein the indication information indicates that the second user plane function network element cannot meet the service.

22. The method according to claim 21, wherein the method further comprises:
determining, by the first user plane function network element, a second flow that meets the requirement of the service, wherein the second flow is in a tunnel between the first user plane function network element and a third user plane function network element, and the third user plane function network element supports the service.

23. The method according to any one of claims 12 to 22, wherein the first user plane function network element is an anchor user plane function network element of the terminal device.

24. A communication apparatus, comprising:
a processor, configured to execute a computer program stored in a memory, to enable the apparatus to perform the method according to any one of claims 1 to 11 or any one of claims 12 to 23.

25. The apparatus according to claim 24, wherein the apparatus further comprises the memory.

26. A computer-readable storage medium, wherein the computer-readable storage medium stores a computer program, and when the computer program is run on a computer, the computer is enabled to perform the method according to any one of claims 1 to 11 or any one of claims 12 to 23.

27. A computer program product, wherein the computer program product comprises instructions used to perform the method according to any one of claims 1 to 11 or any one of claims 12 to 23.

28. A communication system, comprising a session management function network element entity and a first user plane function network element entity, wherein
the session management function network element entity is configured to perform the method according to any one of claims 1 to 11; and
the first user plane function network element entity is configured to receive second information of a service and a first identifier.
